# EUROPEAN PATENT APPLICATION

(11) **EP 4 072 182 A1**
(43) Date of publication of application: **12.10.2022**
(21) Application number: 20912490.8
(22) Date of filing: 25.12.2020
(51) Int. Cl.: H04W 16/14, H04W 48/10, H04W 74/08, H04W 84/12

(54) **COMMUNICATION DEVICE AND COMMUNICATION METHOD**

(30) Priority: 10.01.2020 JP 2020002712
(71) Applicant: Sony Group Corporation, Tokyo 108-0075 (JP)
(72) Inventor: SUGAYA Shigeru, Tokyo 108-0075 (JP)
(74) Representative: D Young & Co LLP
(86) International application number: PCT/JP2020/048730
(87) International publication number: WO 2021/140960

(57) **Abstract**

The present technology relates to a communication device and a communication method that enable the occupancy condition of a transmission channel to be recognized with ease.

There is provided a communication device including a controller configured to perform controlling of transmitting a data signal to another communication device via a transmission channel, in which the controller performs controlling of selecting a training pattern corresponding to an occupancy time of the transmission channel among a plurality of types of training patterns and transmitting a signal with the selected training pattern attached to the another communication device via the transmission channel. The present technology can be applied to, for example, a wireless LAN system.

## Description

### TECHNICAL FIELD

The present technology relates to communication devices and communication methods, and particularly, to a communication device and a communication method that enable the occupancy condition of a transmission channel to be recognized with ease.

### BACKGROUND ART

The explosive use of wireless LAN systems these days has paid attention to technology to enable the time or domain not being utilized by the existing temporary system to be used by other wireless communication systems using frequency sharing techniques.

Wireless communication systems in the related art have typically employed a method of defining one predetermined preamble signal to detect only the signal used in the wireless communication systems.

Patent Document 1 also discloses the technique for the configuration of defining a signal having different preamble structures between first and second groups and delaying the transmission by the second group using the first preamble structure.

### CITATION LIST

### PATENT DOCUMENT

Patent Document 1: Japanese National-Phase Publication (JP-A) No. 2019-520754

### SUMMARY OF THE INVENTION

### PROBLEMS TO BE SOLVED BY THE INVENTION

Such wireless communication systems in the related art have their own prescribed preamble signal and so are incapable of detecting preamble signals of other wireless communication systems. Therefore, it resulted in failing to recognize the occupancy condition of a transmission channel used by the other wireless communication system. Thus, it is desirable to have the technology for ease of recognizing the occupancy condition of the transmission channel.

The present technology is made in view of such a situation and is intended to make it possible to recognize the occupancy condition of the transmission channel with ease.

### SOLUTIONS TO PROBLEMS

A communication device according to an aspect of the present technology includes a controller configured to perform controlling of transmitting a data signal to another communication device via a transmission channel, in which the controller performs controlling of selecting a training pattern corresponding to an occupancy time of the transmission channel among a plurality of types of training patterns and transmitting a signal with the selected training pattern attached to the another communication device via the transmission channel.

A communication method according to an aspect of the present technology includes selecting, by a communication device, a training pattern corresponding to an occupancy time of a transmission channel among a plurality of types of training patterns, and transmitting, by the communication device, to another communication device via the transmission channel, a signal with the selected training pattern attached, in which the communication device performs controlling of transmitting a data signal to the another communication device via the transmission channel.

In the communication device and communication method of one aspect of the present technology, the training pattern corresponding to the occupancy time of the transmission channel is selected among the plurality of types of training patterns, and the signal to which the selected training pattern is attached is transmitted to the another communication device via the transmission channel.

A communication device according to an aspect of the present technology includes a controller configured to perform controlling of receiving a data signal transmitted from another communication device via a transmission channel, in which the controller selects a training pattern corresponding to an occupancy time of the transmission channel among a plurality of types of training patterns and transmits, to the another communication device via the transmission channel, a signal with the selected training pattern attached.

A communication method according to an aspect of the present technology includes selecting, by a communication device, a training pattern corresponding to an occupancy time of a transmission channel among a plurality of types of training patterns, and transmitting, by the communication device, to another communication device via the transmission channel, a signal with the selected training pattern attached, in which the communication device performs controlling of receiving a data signal transmitted from the another communication device via the transmission channel.

In the communication device and communication method of one aspect of the present technology, the training pattern corresponding to the occupancy time of the transmission channel is selected among the plurality of types of training patterns, and the signal to which the selected training pattern is attached is transmitted to the another communication device via the transmission channel.

Note that the communication device according to an aspect of the present technology can be an independent unit or device or an internal block included in a single unit.

### BRIEF DESCRIPTION OF DRAWINGS

Fig. 1 is a diagram illustrating an exemplary configuration of a wireless communication network of wireless communication systems to which the present technology is applied.
Fig. 2 is a diagram illustrating an exemplary configuration of a format of a training pattern to which the present technology is applied.
Fig. 3 is a diagram illustrating a first example of a configuration of a data frame including the training pattern to which the present technology is applied.
Fig. 4 is a diagram illustrating a second example of a configuration of a data frame including the training pattern to which the present technology is applied.
Fig. 5 is a diagram illustrating a third example of a configuration of a data frame including the training pattern to which the present technology is applied.
Fig. 6 is a diagram illustrating a fourth example of a configuration of a data frame including the training pattern to which the present technology is applied.
Fig. 7 is a diagram illustrating an exemplary configuration of a data payload in a data frame.
Fig. 8 is a diagram illustrating a first example of a configuration of a data payload including the training pattern to which the present technology is applied.
Fig. 9 is a diagram illustrating a second example of a configuration of a data payload including the training pattern to which the present technology is applied.
Fig. 10 is a diagram illustrating a first example of a configuration of another frame including the training pattern to which the present technology is applied.
Fig. 11 is a diagram illustrating a second example of a configuration of another frame including the training pattern to which the present technology is applied.
Fig. 12 is a diagram illustrating a third example of a configuration of another frame including the training pattern to which the present technology is applied.
Fig. 13 is a diagram illustrating a fourth example of a configuration of another frame including the training pattern to which the present technology is applied.
Fig. 14 is a diagram illustrating a first example of an access control sequence depending on the type of the training pattern to which the present technology is applied.
Fig. 15 is a diagram illustrating a second example of an access control sequence depending on the type of the training pattern to which the present technology is applied.
Fig. 16 is a diagram illustrating a third example of an access control sequence depending on the type of the training pattern to which the present technology is applied.
Fig. 17 is a diagram illustrating a fourth example of an access control sequence depending on the type of the training pattern to which the present technology is applied.
Fig. 18 is a diagram illustrating a fifth example of an access control sequence depending on the type of the training pattern to which the present technology is applied.
Fig. 19 is a diagram illustrating a sixth example of an access control sequence depending on the type of the training pattern to which the present technology is applied.
Fig. 20 is a diagram illustrating a seventh example of an access control sequence depending on the type of the training pattern to which the present technology is applied.
Fig. 21 is a diagram illustrating an eighth example of an access control sequence depending on the type of the training pattern to which the present technology is applied.
Fig. 22 is a diagram illustrating a ninth example of an access control sequence depending on the type of the training pattern to which the present technology is applied.
Fig. 23 is a diagram illustrating a first example of interaction between a transmitting-side and receiving-side communication devices upon data transmission.
Fig. 24 is a diagram illustrating a second example of interaction between a transmitting-side and receiving-side communication devices upon data transmission.
Fig. 25 is a diagram illustrating a third example of interaction between a transmitting-side and receiving-side communication devices upon data transmission.
Fig. 26 is a diagram illustrating a fourth example of interaction between a transmitting-side and receiving-side communication devices upon data transmission.
Fig. 27 is a diagram illustrating a fifth example of interaction between a transmitting-side and receiving-side communication devices upon data transmission.
Fig. 28 is a diagram illustrating a sixth example of interaction between a transmitting-side and receiving-side communication devices upon data transmission.
Fig. 29 is a block diagram illustrating an exemplary configuration of a communication device to which the present technology is applied.
Fig. 30 is a block diagram illustrating an exemplary configuration of a wireless communication module of Fig. 29.
Fig. 31 is a flowchart illustrated to describe the data transmission processing procedure.
Fig. 32 is a flowchart illustrated to describe the data transmission processing procedure.
Fig. 33 is a flowchart illustrated to describe the access control processing procedure.
Fig. 34 is a flowchart illustrated to describe the access control processing procedure.
Fig. 35 is a flowchart illustrated to describe the data reception processing procedure.
Fig. 36 is a flowchart illustrated to describe the data reception processing procedure.

### MODE FOR CARRYING OUT THE INVENTION

### <1. Embodiment of the present technology>

In the related art, private wireless communication systems such as wireless local area network (LAN) and public wireless communication systems have been clearly distinguished in frequency bands to use, so there has been no environment in which both wireless communication systems coexist.

The explosive use of wireless LAN systems these days is running out of frequency bands to use, and so it is desired to obtain a practical implementation of technology that uses a new frequency band. So, attention is paid to technology for utilization to enable the time or domain not being utilized by the existing primary wireless communication system to be used by other wireless communication systems using frequency sharing techniques.

In wireless communication technology in the related art, wireless communication systems that utilize the same frequency band have been set to use the same signal format. The wireless LAN systems have had the standard using the same preamble structure attached to the beginning of the signal to maintain compatibility with the devices of that time that have been utilized since the 90s.

However, although the wireless LAN systems are achieving a practical implementation of higher performance and higher speed transmission with the change of times, they still employ a frame format that follows the preamble structure in the past. This existing configuration having such legacy preamble signals needed to be attached has accordingly increased information to be attached increasingly in the latest generation, resulting in an inefficient frame configuration that needs to recognize communication devices of all generations up to now.

Further, in public wireless communication systems such as the fifth-generation mobile communication system (5G) developed by the third generation partnership project (3GPP), telecommunications carriers can occupy the frequency band exclusively. So, it is not necessary for telecommunications carriers to get compatibility between standards for every generation, which makes it easier to introduce significantly modified systems to the next generation of technology.

However, immediate conversion of generations necessitates the replacement of base station equipment and communication terminals all at once, which leads to expensive. So, an approach to the launch of new services one after another while maintaining compatibility with the communication standards of the previous generation is being employed.

Technical proposals are currently being made that enable other wireless communication systems to utilize the 6 GHz frequency band on the condition that they do not affect the existing primary wireless communication system. The contemplation is being conducted that both the wireless LAN system and fifth-generation mobile communication system (5G) mutually use this frequency band.

Such wireless communication systems in the related art have typically employed a method of defining one predetermined preamble signal to detect only the signal used in the wireless communication systems.

Such wireless communication systems in the related art have their own prescribed preamble signal and so are incapable of detecting preamble signals of other wireless communication systems.

The launching of services by different wireless communication systems at substantially the same time for a new frequency band causes one wireless communication system to fail to detect a signal of the other wireless communication system. So, the one wireless communication system will be likely to transmit a signal even though the transmission channel is in use by the other wireless communication system, which probably has a negative influence on the communication quality of both wireless communication systems.

Further, one wireless communication system can set its own signal format to a signal format used in the frequency band, and then this blocks the participation of the other wireless communication system, which may prevent an agreement on the use of the frequency band available in the frequency sharing technique from reaching.

Alternatively, an approach to setting and utilizing an entirely new signal format incompatible with both wireless communication systems can also be considered, but not only the signal format but also the access scheme or the like is necessary to be agreed upon between two systems. So, in this approach, one wireless communication system has more significant influence than the other wireless communication system, making it difficult to achieve its utilization by the other wireless communication system.

For addressing such problems, a common preamble signal is set among the predetermined signal formats, and both wireless communication systems transmit data to be sent with the common preamble signal appended to its beginning. They can decide that the transmission channel is in use upon the detection of the preamble signal.

However, the common preamble signal is attached only to the beginning of the data, so if data in the middle of transmission is detected, such an approach to setting the common preamble signal fails to judge how much the transmission channel is occupied immediately.

Thus, the present technology provides a configuration with a plurality of training pattern formats capable of identifying the occupancy time of the transmission channel (wireless transmission channel). In this configuration, data with the training pattern format selectively attached to its beginning is transmitted.

Furthermore, there is provided a configuration in which the selectively inserted training pattern format is transmitted depending on the remaining time for occupying the transmission channel, even for a signal format that is inserted as a mid-amble in the middle of long data.

There is also provided, in a case the remaining time for occupying the transmission channel occurs, a configuration of notifying that the transmission channel is released by transmitting a training pattern indicating a transmission end time as what is called a trailer signal.

Furthermore, also for data-receiving-side communication devices, there is provided a configuration of selecting and transmitting a training pattern format corresponding to a transmission channel occupancy time depending on the presence or absence of data to be retransmitted or the amount of data to be retransmitted in response to a data receipt acknowledgment result.

Embodiments of the present technology are now described with reference to the drawings.

### (Network Configuration)

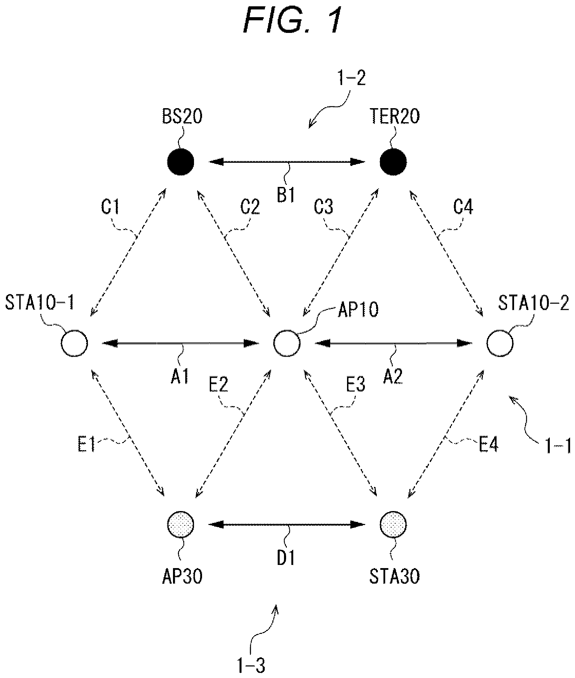

Fig. 1 illustrates an exemplary configuration of a wireless communication network of a wireless communication system to which the present technology is applied.

In Fig. 1, a communication device 10 that constitutes a wireless LAN system 1-1 is indicated with a white circle in the figure and includes a communication terminal STA10-1 and a communication terminal STA10-2. These communication devices 10 are communicable with each other, while being connected to an access point AP10. This is denoted with solid lines A1 and A2 in the figure.

A communication device 20 includes a base station BS20 and a communication terminal TER 20, which are denoted with a black circle in the figure and are close to each other around the wireless LAN system 1-1. The communication device 20 constitutes the other wireless communication system 1-2, such as the fifth-generation mobile communication system (5G). These communication devices 20 are communicable with each other, which is denoted with a solid line B1 in the figure.

Further, in the figure, broken line arrows C1 to C4 indicate that the wireless LAN system 1-1, which does not recognize a signal format used in the other wireless communication system 1-2, receives signals with the communication between them being interfered.

Furthermore, a communication device 30 includes an access point AP 30 and a communication terminal STA30 operated in different frequency bands, which are denoted by a circle with a dot pattern in the figure. The communication devices 30 are in the vicinity of the wireless LAN system 1-1 and constitute the other wireless LAN system 1-3. The communication devices 30 are communicable with each other, which is denoted with a solid line D1 in the figure.

In this regard, the wireless LAN system 1-1 and the wireless LAN system 1-3 have used a communication frame configuration that supports backward compatibility since the past, and so they are capable of communicating with each other even upon different versions (generations).

However, using a signal format incompatible with the existing one later defined in a newly added frequency band may cause it difficult for the wireless LAN system in the related art and the latest wireless LAN system to communicate with each other. Thus, the use of different signal formats may cause the signal of the wireless LAN system in the related art to interfere with that of a newly added wireless LAN system, which is denoted with broken line arrows E1 to E4 in the figure.

In other words, this indicates that signals from the communication devices existing in their vicinity reach the access points AP10 and AP30 as information causing interference.

Moreover, the description is now given by referring to a communication device that transmits data as a transmitting-side communication device and referring to a communication device that receives data as a receiving-side communication device. In one example, in the wireless LAN system 1-1, the data transmitted from a transmitting-side communication device 10Tx, such as the access point AP10, is received by a receiving-side communication device 10Rx, such as the communication terminal STA10-1.

### (Configuration of Training Pattern Format)

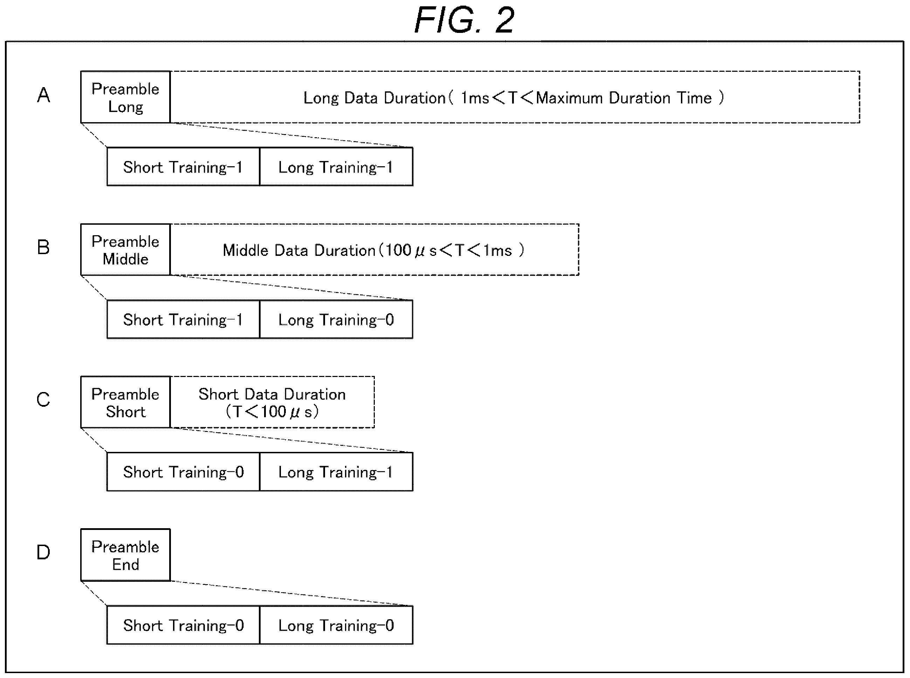

Fig. 2 illustrates an exemplary configuration of a training pattern format that is common to different wireless communication systems.

A training pattern to be attached as a first preamble (Preamble Long: PL) in a case where a transmission channel is likely to be occupied for a long period of time is illustrated in A of Fig. 2. Examples of such a case include a case of transmitting a long data payload or a case of transmitting data more frequently. The training pattern illustrated in A of Fig. 2 is hereinafter also referred to as a first preamble PL.

Specifically, the first preamble PL allows identification that a transmission channel occupancy time T reaches the maximum time (Maximum Duration Time) regulated by the communication standards or the communication-related regulations from the time exceeding one millisecond. The first preamble PL has a configuration in which Short Training-1 is placed in the first field, and Long Training-1 is placed in the second field.

A training pattern to be attached as a second preamble (Preamble Middle: PM) in a case where a transmission channel is likely to be occupied for a middle period of time is illustrated in B of Fig. 2. Examples of such a case include a case of transmitting a middle data payload or a case of transmitting data at some extent of frequency. The training pattern illustrated in B of Fig. 2 is hereinafter also referred to as a second preamble PM.

Specifically, the second preamble PM has a configuration that allows identification that the transmission channel occupancy time T from the time exceeding 100 microseconds to the time reaching one millisecond. The second preamble PM has a configuration in which Short Training-1 is placed in the first field, and Long Training-0 is placed in the second field.

A training pattern to be attached as a third preamble (Preamble Short: PS) in a case where a transmission channel is likely to be used for one-frame communication is illustrated in C of Fig. 2. Examples of such a case include a case of transmitting a short data payload or a case of transmitting data at some extent of frequency. The training pattern illustrated in C of Fig. 2 is hereinafter also referred to as a third preamble PS.

Specifically, the third preamble PS has a configuration that allows identification that the transmission channel occupancy time T is less than 100 microseconds. The third preamble PS has a configuration in which Short Training-0 is placed in the first field, and Long Training-1 is placed in the second field.

A training pattern that is set as a fourth preamble (PE: Preamble End) in a case of indication of use completion and release of a transmission channel is illustrated in D of Fig. 2. The training pattern illustrated in D of Fig. 2 is hereinafter also referred to as a fourth preamble PE.

Specifically, the fourth preamble PE can be configured as a trailer signal placed at the end of the frame or as a training signal that does not include data. The fourth preamble PE has a configuration in which Short Training-0 is placed in the first field, and Long Training-0 is placed in the second field.

In this way, the first preamble PL (Preamble Long), the second preamble PM (Preamble Middle), the third preamble PS (Preamble Short), and the fourth preamble PE (Preamble End) include a combination of a plurality of training sequences such as short training and long training.

In other words, the preamble, such as the first preamble PL, includes the training pattern to which the present technology is applied. The first preamble PL, the second preamble PM, the third preamble PS, and the fourth preamble PE as training patterns are now described.

However, in other wireless communication systems such as the fifth-generation mobile communication system (5G), in some cases, the training pattern, which is the first preamble PL, the second preamble PM, the third preamble PS, or the fourth preamble PE described below corresponds to a preamble.

In other words, the training pattern corresponds to a combination of pieces of frame training (training sequences) defined in the wireless LAN system to which the present technology is applied and corresponds to the frame preamble defined in the fifth-generation mobile communication system (5G).

Moreover, training fields, such as short and long training, include information or the like for detecting signals. In addition, in Fig. 2, "long", "middle", and "short" indicating the length values of the data payload represent the relative lengths when the lengths of the data payload are classified into three phases for comparison for convenience's sake.

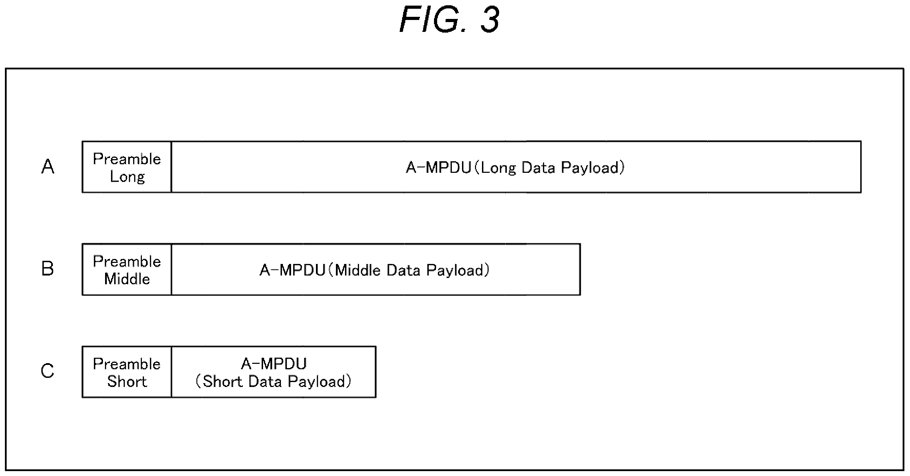

The configuration of the data frame including the training pattern to which the present technology is applied is now described with reference to Figs. 3 to 6.

### (First example)

Fig. 3 illustrates a first example of the configuration of the data frame including the training pattern to which the present technology is applied.

Fig. 3 illustrates the data frame having an exemplary configuration having an attached training pattern corresponding to the transmission channel occupancy time depending on the length of the data payload, with the data payload portion being configured as an A-MPDU(an aggregation-MPDU). In other words, the training pattern is attached to the beginning of the data frame.

The A-MPDU is configured as one frame that aggregates multiple data units (MAC protocol data unit: MPDU). In this regard, if the A-MPDU is set to a data frame, each of the aggregated MPDUs can be a subframe.

Moreover, an example of the A-MPDU that includes PLCP header information related to a protocol (PHY layer convergence protocol: PLCP) for converting a MAC layer frame into a PHY layer frame is illustrated. However, the A-MPDU can be configured without information.

Referring to A of Fig. 3, a configuration of using the training pattern for a long data payload is illustrated, with the data payload (Long Data Payload) to which the first preamble PL is attached being configured as A-MPDU.

Referring to B of Fig. 3, a configuration of using the training pattern for a middle data payload is illustrated, with payload data (Middle Data Payload) to which the second preamble PM is attached being configured as A-MPDU.

Referring to C of Fig. 3, a configuration of using the training pattern for a short data payload is illustrated, with the payload (Short Data Payload) to which the third preamble PS is attached being configured as A-MPDU.

### (Second example)

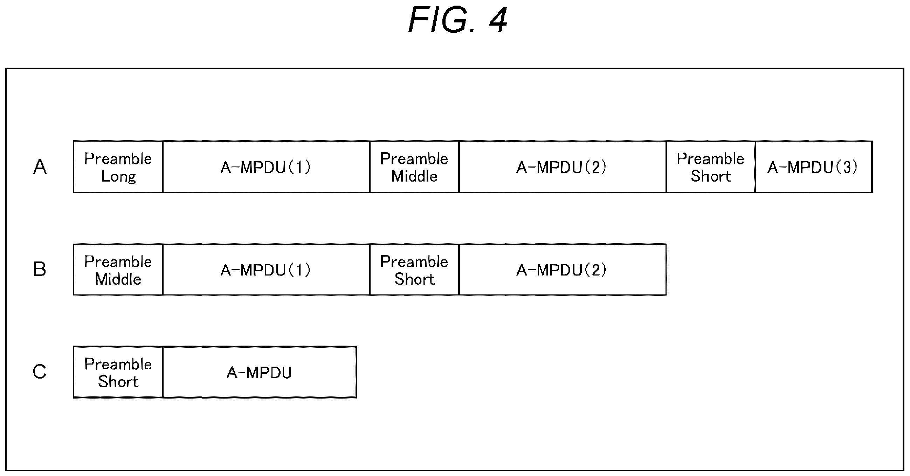

Fig. 4 illustrates a second example of the configuration of the data frame including the training pattern to which the present technology is applied.

In Fig. 4, the data frame has a configuration in which a training pattern corresponding to the transmission channel occupancy time is attached to the beginning depending on the length of the data payload, and then a training pattern corresponding to the remaining occupancy time is inserted even in the middle of the frame at a predetermined length and at the timing of time elapsed. In other words, the training pattern is attached even in the middle of the data frame.

A configuration of using the training pattern for a long data payload is illustrated in A of Fig. 4. The first preamble PL is attached to the beginning, and A-MPDU(1) is configured as the data payload of a predetermined length. Next, the second preamble PM corresponding to the further remaining time is attached, and A-MPDU(2) is configured as a data payload of a predetermined length. Then, the third preamble PS corresponding to the still further remaining time is attached, and A-MPDU(3) is configured as the remaining data payload.

A configuration of using the training pattern for a middle data payload is illustrated in B of Fig. 4. The second preamble PM is attached to the beginning, and A-MPDU(1) is configured as the data payload of a predetermined length. Next, the third preamble PS corresponding to the further remaining time is attached, and A-MPDU(2) is configured as the remaining data payload.

In C of Fig. 4, a configuration of using a training pattern for a short data payload is illustrated, and no training pattern is necessary to be inserted in the middle. In this case, the third preamble PS is attached to the beginning, and only the A-MPDU is configured as the short data payload.

As described above, the gradual change in training patterns from the training pattern indicating a long occupancy time to the training pattern indicating a short occupancy time makes it possible for even the communication device of the other wireless communication system to recognize an approximate value (rough time value) of a remaining transmission channel occupancy time. This value may not be exact.

### (Third example)

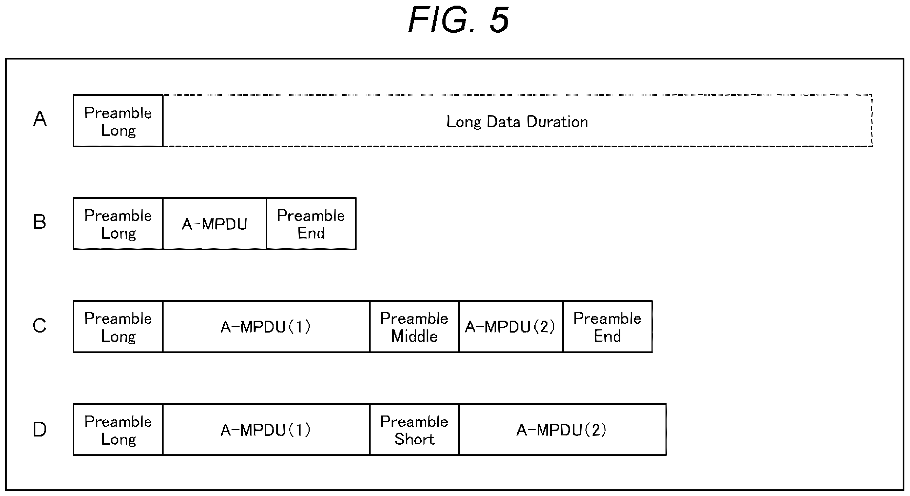

Fig. 5 illustrates a third example of the configuration of the data frame including the training pattern to which the present technology is applied.

Fig. 5 illustrates a configuration of changing the type of the training pattern depending on a situation in which the transmission is completed in a shorter time than expected during communication, though the long data payload is initially intended to be transmitted. In other words, the training pattern varies depending on communication traffic.

In A of Fig. 5, a transmission channel is initially likely to be occupied for a long period of time, and so notice to use the transmission channel is made by attaching the first preamble PL.

Then, in a case of transmitting only a short data payload (A-MPDU) following the first preamble PL as illustrated in B of Fig. 5, at the end thereof, the fourth preamble PE indicating the completion is transmitted. This makes it possible to notify the end of occupancy in a case where the transmission channel occupancy is expected to be made for a long period of time but is practically made for only a short period of time.

Further, as illustrated in C of Fig. 5, A-MPDU(1) is transmitted as a data payload of a predetermined length following the first preamble PL. Next, the second preamble PM corresponding to the remaining time is attached, and then A-MPDU(2) is transmitted as the remaining data payload. In this event, if this data payload (A-MPDU(2)) is short and the time is left, the fourth preamble PE indicating the completion is transmitted at the end thereof.

Further, as illustrated in D of Fig. 5, the A-MPDU(1) is transmitted as a data payload of a predetermined length following the first preamble PL, and the subsequent data transmission time is short. If so, the third preamble PS is attached, and the A-MPDU(2) is configured as a short data payload.

Moreover, in the case of D in Fig. 5, the data transmission is completed within the predetermined occupancy time defined by the third preamble PS, and so the fourth preamble PE is not necessarily transmitted.

Moreover, in this case as well, the gradual change in training patterns from the training pattern indicating a long occupancy time to the training pattern indicating a short occupancy time makes it possible for even the communication device of the other wireless communication system to recognize an approximate value of a remaining transmission channel occupancy time.

### (Fourth example)

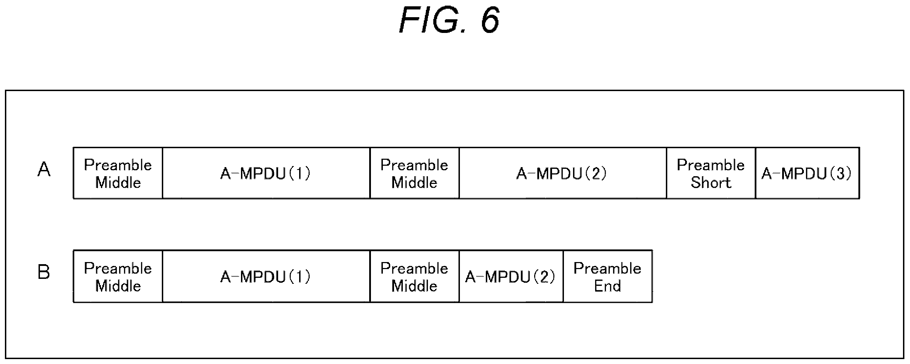

Fig. 6 illustrates a fourth example of the configuration of the data frame including the training pattern to which the present technology is applied.

Fig. 6 illustrates a configuration in which the middle data payload is intended to occupy a transmission channel, but the transmission is not completed as intended.

In A of Fig. 6, the middle data payload is initially intended to occupy a transmission channel, so the second preamble PM is attached, and the A-MPDU(1) is configured as the first data payload. However, if the remaining data payload is unexpired within the occupancy time set in the third preamble PS, the configuration described below is made.

In other words, in A of Fig. 6, the second preamble PM is attached again to indicate that the transmission channel occupancy time is extended, and the A-MPDU(2) is configured as the data payload. Then, the third preamble PS is attached, and the A-MPDU(3) is transmitted as the remaining data payload.

Further, in B of Fig. 6, the middle data payload is initially intended to occupy the transmission channel, and so the second preamble PM is attached, and the A-MPDU(1) is configured as the first data payload. In this event, even in a case where the completion of the data transmission fails to be discriminated, the second preamble PM is attached again to indicate that the transmission channel occupancy time is extended, and the A-MPDU(2) is configured as the data payload.

Then, in B of Fig. 6, in a case where the A-MPDU(2) is transmitted in a shorter occupancy time than intended, the fourth preamble PE indicating the completion is transmitted at the end thereof.

This continuation of the training pattern indicating the middle occupancy time makes it possible for the communication device of the other wireless communication system to recognize the extended occupancy time of the transmission channel using the state of the training pattern.

### (Data Payload Configuration)

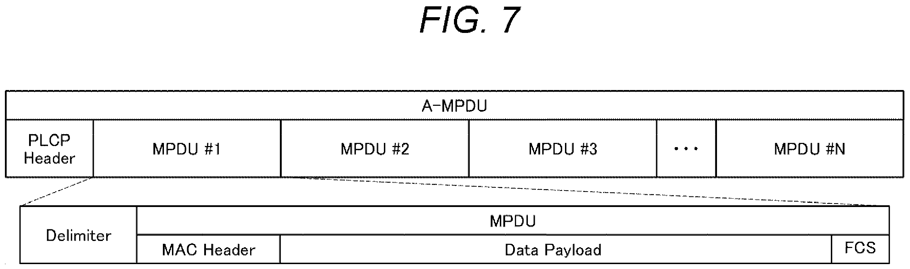

Fig. 7 illustrates an exemplary configuration of a data payload in a data frame transmitted from the transmitting-side communication device 10Tx to the receiving-side communication device 10Rx.

The configuration of the data payload is substantially the same as that defined by the configuration of A-MPDU, similarly to the method in the related art. In other words, the data payload has a plurality of MPDUs from MPDU #1 to MPDU #N concatenating to a predetermined PLCP header (PLCP Header).

The respective MPDUs have a predetermined delimiter attached to each of them, and the MPDU includes a predetermined MAC header (MAC Header), a data payload (Data Payload), and a frame check sequence (FCS).

### (First example)

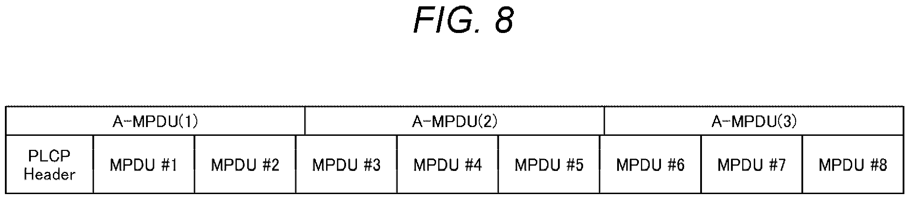

Fig. 8 illustrates a first example of the configuration of the data payload including the training pattern to which the present technology is applied.

In Fig. 8, a frame configuration having A-MPDU(1), followed by A-MPDU(2), and followed by A-MPDU(3)is exemplified. The A-MPDU(1) is configured for up to a predetermined number of symbols or a predetermined period of timing, and the A-MPDU(2) is configured up to a predetermined number of symbols or a predetermined time timing. The A-MPDU(3) is configured for the remaining time.

In other words, the training pattern to which the present technology is applied is inserted as a mid-amble between the A-MPDU(1) and the A-MPDU(2). Between the A-MPDU(2) and the A-MPDU(3) as well, the training pattern to which the present technology is applied is inserted as a mid-amble.

In the case of such a configuration, the mid-amble is inserted in the middle of the data payload independent of the boundary between MPDUs, and the data following the mid-amble is placed discontinuously in terms of MPDU. Specifically, among MPDU #1 to MPDU #8, MPDU #3 is placed across the A-MPDU(1) and the A-MPDU(2), and MPDU #6 is placed across the A-MPDU(2) and the A-MPDU(3).

### (Second example)

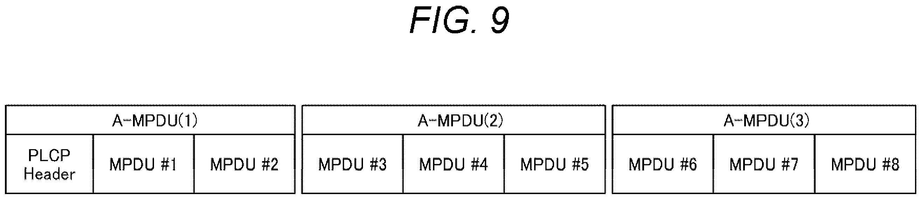

Fig. 9 illustrates a second example of the configuration of the data payload including the training pattern to which the present technology is applied.

In Fig. 9, the boundary between the A-MPDU(1), A-MPDU(2), and A-MPDU(3) has a frame structure configured as units of MPDUs. The training pattern to which the present technology is applied is placed by being inserted as a mid-amble at each boundary.

In other words, the A-MPDU(1) includes the PLCP header, MPDU #1, and MPDU #2. The A-MPDU(2) includes MPDU #3 to MPDU #5. The A-MPDU(3) includes MPDU #6 to MPDU #8.

Such a configuration depends on the boundary between MPDUs upon inserting a mid-amble in the middle of the data payload. So, the configuration is such that the data following the mid-amble is capable of being processed independently as an MPDU. In addition, the bit padding required for the units of signal processing can be inserted at the ends of the MPDUs.

### (Other Frame Configurations)

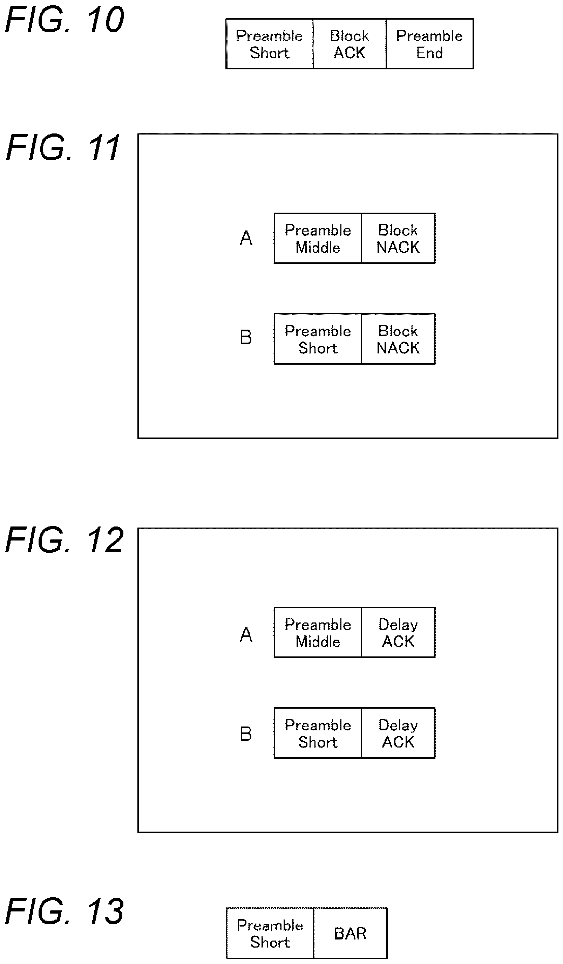

The structure of the training pattern to which the present technology is applied is not limited to the data frame, but can be used for other frames. The configuration of other frames including the structure of the training pattern to which the present technology is applied is now described with reference to Figs. 10 to 13.

### (First example)

Fig. 10 illustrates a first example of the configuration of another frame including the training pattern to which the present technology is applied.

In Fig. 10, the configuration of using the structure of the training pattern to which the present technology is applied for a block ACK frame (Block ACK) is illustrated. The block ACK frame is a frame that is replied to the transmitting-side communication device 10Tx as a block ACK indicating that the receiving-side communication device 10Rx has received all the data.

The block ACK frame has a short transmission channel occupancy time and is used transiently, so the third preamble PS is attached, followed by the block ACK information field, and then, if necessary, the fourth preamble PE indicating the completion is placed for transmission at the end of the frame.

In other words, it is possible to notify the release of the transmission channel from the fact that the block ACK frame is completed in a short occupancy time and no retransmission is performed upon occupation of the transmission channel.

### (Second example)

Fig. 11 illustrates a second example of the configuration of another frame including the training pattern to which the present technology is applied.

In Fig. 11, the configuration of using the structure of the training pattern to which the present technology is applied for a block NACK frame (Block NACK) is illustrated. The block NACK frame is a frame that is replied to the transmitting-side communication device 10Tx as a block ACK that can identify undelivered data in a case where the receiving-side communication device 10Rx is failed to receive some or all the data correctly.

If there is a possibility that undelivered data (unreceived data) is retransmitted after sending the block NACK frame as a reply, the transmission channel is used depending on the amount of data to be retransmitted. Thus, the block NACK frame has a configuration in which the training pattern is selected and attached depending on the estimation of the transmission channel occupancy time.

In other words, as illustrated in A of Fig. 11, in a case where the amount of retransmission data is relatively large and there is a possibility that the data is transmitted in excess of a predetermined time, the block NACK frame has a configuration to which the second preamble PM is attached.

Further, as illustrated in B of Fig. 11, in a case where the amount of retransmission data is relatively small and there is a high possibility that the data is transmitted within a predetermined time, the block NACK frame has a configuration to which the third preamble PS is attached.

Moreover, there is a possibility that data is retransmitted after the transmission of the block NACK frame, so the block NACK frame has a configuration to which the fourth preamble PE indicating the completion is unattached.

### (Third example)

Fig. 12 illustrates a third example of the configuration of another frame including the training pattern to which the present technology is applied.

Fig. 12 illustrates a configuration of using the structure of the training pattern to which the present technology is applied for a delay ACK frame (Delay ACK). The delay ACK frame is a frame that is intended to be replied to the transmitting-side communication device 10Tx in a case where the transmission of ACK information as a reply is pending, such as a case where the receiving-side communication device 10Rx fails to gather ACK information by a predetermined time or a case where there is periodic use by the other wireless communication system 1-2.

The delay ACK frame has a configuration in which a training pattern is selected and attached depending on the estimation of a latency time and the transmission channel occupancy time. The latency time ranges from sending of the delay ACK frame as a reply to the timing at which the formal block ACK frame or the block NACK frame is likely to be replied to.

In other words, in A of Fig. 12, the delay ACK frame has a configuration in which the second preamble PM is attached in a case where there is a possibility that the latency time until the block ACK frame or block NACK frame is replied exceeds a predetermined time.

Further, in B of Fig. 12, the delay ACK frame has a configuration in which the third preamble PS is attached in a case where the latency time until the block ACK frame or the block NACK frame is replied is short and there is a high possibility to be sent within a predetermined time.

Moreover, in this case as well, there is a possibility that the block ACK frame or the block NACK frame is transmitted after the transmission of the delay ACK frame, so the delay ACK frame has a configuration in which the fourth preamble PE is unattached. However, if the transmission channel is periodically used by the other wireless communication system 1-2, the fourth preamble PE can be attached.

### (Fourth example)

Fig. 13 illustrates a fourth example of the configuration of another frame including the training pattern to which the present technology is applied.

Fig. 13 illustrates a configuration of using the structure of the training pattern to which the present technology is applied for a block ACK request (BAR) frame. The block ACK request frame is a frame used to request for the transmitting-side communication device 10Tx to send the block ACK frame in response from the receiving-side communication device 10Rx.

The block ACK request frame is transmitted and immediately followed by the reception of the block ACK frame or the block NACK frame. So, the third preamble PS is attached to the block ACK request frame.

Moreover, the block ACK frame or the block NACK frame is replied immediately after the transmission of the block ACK request frame, so the fourth preamble PE is not attached to the end of the frame.

### (Access Control)

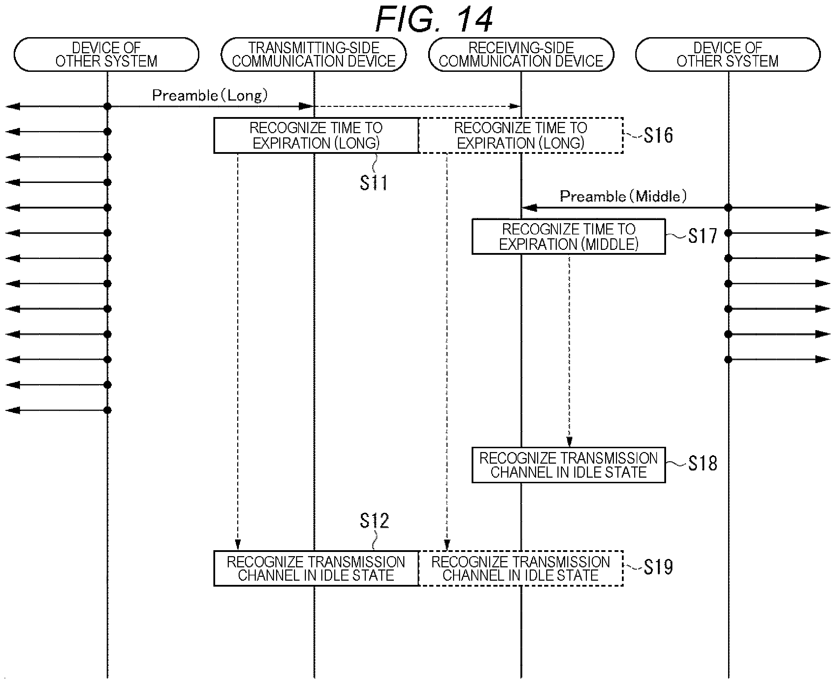

The description is now given of access control depending on the type of training patterns to which the present technology is applied with reference to the sequence diagrams of Figs. 14 to 22.

### (First example)

Fig. 14 illustrates a first example of an access control sequence depending on the type of the training pattern to which the present technology is applied.

In Fig. 14, the use condition of the transmission channel is recognized depending on the detection status of the training pattern type from the other wireless communication system 1-2, upon transmission or reception of data between the transmitting-side communication device 10Tx and the receiving-side communication device 10Rx of the wireless LAN system 1-1 (Fig. 1).

In a case where the transmitting-side communication device 10Tx detects the first preamble PL transmitted from the communication device 20 of the other wireless communication system 1-2, the transmitting-side communication device 10Tx first recognizes that the transmission channel is used for a long period of time on the basis of the type of the training pattern (S11) .

In this event, the other wireless communication system 1-2 is assumed to be kept transmitting signals. This signal has a signal format different from the signal format set in the wireless LAN system 1-1, so the signal fails to be decoded correctly, which is more likely to be detected as noise by the transmitting-side communication device 10Tx or the like.

Thus, the transmitting-side communication device 10Tx, when detecting the first preamble PL, activates a timer that measures the time to the expiration of the occupancy time, which is the maximum length. This configuration allows the fact that the transmission channel is in an idle state to be recognized when the time measured reaches the time at which the occupancy time expires (S12).

Similarly, the receiving-side communication device 10Rx, when detecting the second preamble PM transmitted from the communication device 20 of the other wireless communication system 1-2, also recognizes that the transmission channel is used for a middle period of time on the basis of the type of the training pattern (S17).

Thus, the receiving-side communication device 10Rx, when detecting the second preamble PM, activates a timer that measures the time to the expiration of the occupancy time, which is the middle period of time. This configuration allows the fact that the transmission channel is in an idle state to be recognized when the time measured reaches the time at which the occupancy time expires (S18).

Further, the receiving-side communication device 10Rx, when detecting the first preamble PL described above as surrounded by the broken-line frame in the figure, activates the timer that measures the time to the expiration of the occupancy time, which is the maximum length (S16). Then, the receiving-side communication device 10Rx can have a configuration that does not judge that the transmission channel is in an idle state until the measurement by the timer corresponding to the detection of the first preamble PL is terminated even if the measurement by the timer corresponding to the detection of the second preamble PM is terminated (S19).

### (Second example)

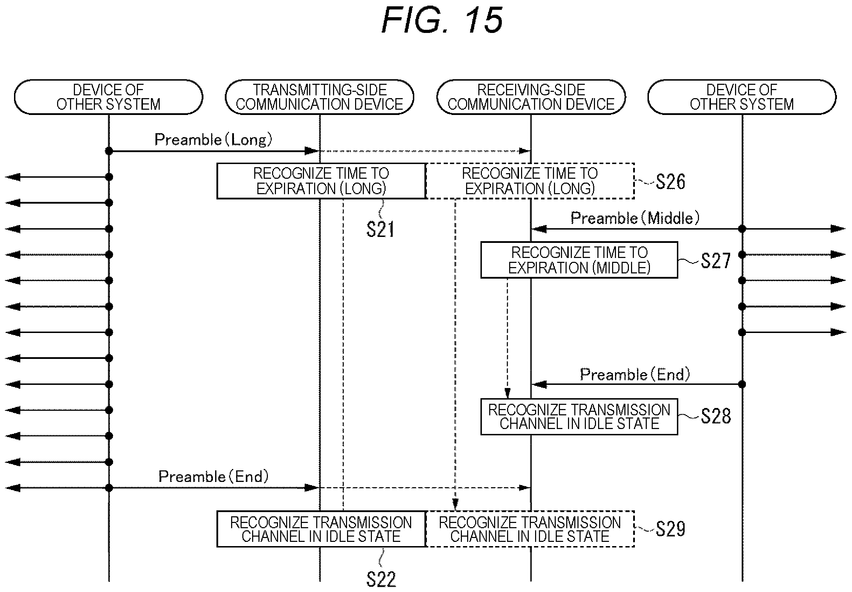

Fig. 15 illustrates a second example of an access control sequence depending on the type of the training pattern to which the present technology is applied.

Fig. 15 is a sequence diagram similar, up to the middle procedure, to the first example illustrated in Fig. 14, so the description thereof is omitted. The sequence shows a case where the transmitting-side communication device 10Tx detects a training pattern in the case where the communication device 20 of the other wireless communication system 1-2 completes the use of the transmission channel and then transmits the fourth preamble PE attached as the training pattern indicating the use completion.

The transmitting-side communication device 10Tx first detects the first preamble PL transmitted from the communication device 20 of the other wireless communication system 1-2 and recognizes that the transmission channel is used for a long period of time (S21). Then, if the fourth preamble PE is detected at the timing when the measurement by the timer corresponding to the detection of the first preamble PL is not yet terminated, at that point, the transmitting-side communication device 10Tx recognizes that the transmission channel is in an idle state and is released (S22) .

Furthermore, the receiving-side communication device 10Rx detects the second preamble PM transmitted from the communication device 20 of the other wireless communication system 1-2 and recognizes that the transmission channel is used for a middle period of time (S27). Then, if the fourth preamble PE is detected at the timing when the measurement by the timer corresponding to the detection of the second preamble PM is not yet terminated, at that point, the receiving-side communication device 10Rx recognizes that the transmission channel is in an idle state (S28).

Further, the receiving-side communication device 10Rx, when detecting the first preamble PL described above as surrounded by the broken-line frame in the figure, activates the timer that measures the time to the expiration of the occupancy time, which is the maximum length (S26). Then, the detection of only one of the fourth preambles PEs is likely not to be a preamble indicating the completion from the first preamble PL. So, the receiving-side communication device 10Rx can also have a configuration that does not judge that the transmission channel is in an idle state until the fourth preamble PE that arrives second (or arrives third and subsequent) is detected or until the measurement by the timer corresponding to the detection of the first preamble PL is terminated (S29).

### (Third example)

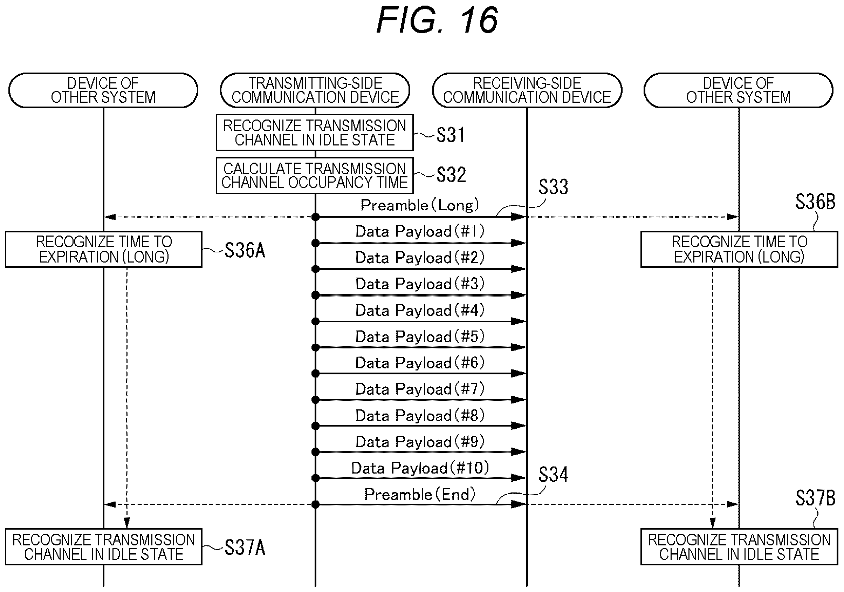

Fig. 16 illustrates a third example of an access control sequence depending on the type of the training pattern to which the present technology is applied.

Fig. 16 is a sequence diagram illustrating the transmission of a data frame having the first preamble PL attached to the beginning thereof from the transmitting-side communication device 10Tx to the receiving-side communication device 10Rx in the wireless LAN system 1-1.

The transmitting-side communication device 10Tx, when recognizing that the transmission channel is in an idle state (S31), first calculates the transmission channel occupancy time of the data frame to be transmitted (S32) and selects the training pattern depending on the duration. The recognition that the transmission channel is in an idle state is made using the detection status of the training pattern sent from the communication device 20 or the like of the other wireless communication system 1-2 on the transmission channel on the basis of the access control sequence described above.

Then, in the case where the occupancy time of the transmission channel is long, the first preamble PL is selected and transmitted with being attached to the beginning of the data frame (S33). After that, data payloads (Data Payload (#1) to Data Payload (#10)) are sequentially transmitted as the data payload in the signal format set by the wireless LAN system 1-1.

On the other hand, the receiving-side communication device 10Rx has a frame structure defined by the wireless LAN system 1-1, following the first preamble PL transmitted from the transmitting-side communication device 10Tx. So, in the receiving-side communication device 10Rx, the data payloads (Data Payload (#1) to Data Payload (#10)) are decoded in accordance with parameters described in the PLCP header or the like.

Further, the communication device 20 of the other wireless communication system 1-2 that detects the first preamble PL, even when failing to decode the signal format defined by the wireless LAN system 1-1, is capable of recognizing the transmission channel occupancy time depending on the type of training patterns.

In other words, the communication device 20 of the other wireless communication system 1-2 is capable of recognizing that the transmission channel is occupied over the maximum duration defined by the first preamble PL and activating the timer that measures the time corresponding to the duration, which allows the time when the transmission channel is in use to recognize (S36A, S36B) .

After that, the transmitting-side communication device 10Tx, when completing the data transmission, transmits the fourth preamble PE indicating the completion (S34). The communication device 20 of the other wireless communication system 1-2, when detecting the fourth preamble PE and even if the measurement by the timer corresponding to the detection of the first preamble PL is not terminated, is capable of recognizing that the communication concludes and the transmission channel is in an idle state (S37A, S37B).

### (Fourth example)

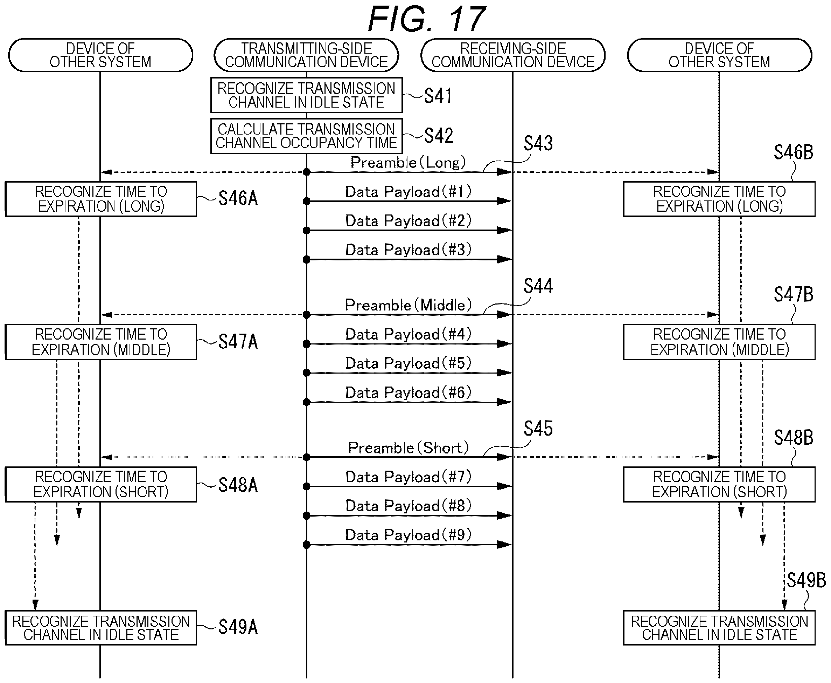

Fig. 17 illustrates a fourth example of an access control sequence depending on the type of the training pattern to which the present technology is applied.

Fig. 17 is a sequence diagram illustrating the transmission of a data frame from the transmitting-side communication device 10Tx to the receiving-side communication device 10Rx in the wireless LAN system 1-1. The data frame has the first preamble PL attached to its beginning, followed by the second preamble PM and the third preamble PS being attached as mid-ambles depending on the transmission channel occupancy time.

The transmitting-side communication device 10Tx, when recognizing that the transmission channel is in an idle state (S41), first calculates the transmission channel occupancy time of the data frame to be transmitted (S42) and selects the training pattern depending on the duration. The recognition that the transmission channel is in an idle state is made using the detection status of the training pattern sent from the communication device 20 or the like of the other wireless communication system 1-2 on the transmission channel on the basis of the access control sequence described above.

Then, in the case where the occupancy time of the transmission channel is long, the first preamble PL is selected and transmitted with being attached to the beginning of the data frame (S43). After that, data payloads (Data Payload (#1) to Data Payload (#3)) are sequentially transmitted as the data payload in the signal format set by the wireless LAN system 1-1.

Subsequently, the transmitting-side communication device 10Tx attaches the second preamble PM as a mid-amble depending on the time that the transmission channel is kept used and then transmits data payloads (Data Payload (#4) to Data Payload (#6)) in a sequential manner (S44) .

Furthermore, the transmitting-side communication device 10Tx attaches the third preamble PS as a mid-amble depending on the time that the transmission channel is kept used and then transmits data payloads (Data Payload (#7) to Data Payload (#9)) in a sequential manner (S45).

On the other hand, the receiving-side communication device 10Rx decodes the data payloads (Data Payload (#1) to Data Payload (#10)) depending on parameters described in the PLCP header or the like. This is because the data payload transmitted following the first preamble PL, the second preamble PM, and the third preamble PS transmitted from the transmitting-side communication device 10Tx has a frame structure defined by the wireless LAN system 1-1.

Further, the communication device 20 of the other wireless communication system 1-2, which sequentially detects the first preamble PL, the second preamble PM, and the third preamble PS transmitted from the transmitting-side communication device 10Tx, is capable of recognizing the occupancy time of the transmission channel depending on the type of training patterns though the signal format defined in the wireless LAN system 1-1 fails to be decoded.

In other words, the communication device 20 of the other wireless communication system 1-2 is capable of recognizing that the transmission channel is occupied over the maximum duration defined by the first preamble PL (S46A, S46B), recognizing that the transmission channel is occupied over the middle period of time defined in the second preamble PM (S47A, S47B), and recognizing that the transmission channel is occupied in the short period of time defined by the third preamble PS (S48A, S48B).

Then, the communication device 20 of the other wireless communication system 1-2 activates a timer for measuring the time corresponding to the duration recognized by each training pattern, which makes it possible to recognize the time during when the transmission channel is in use for each training pattern.

After that, the transmitting-side communication device Tx is possible not to transmit the fourth preamble PE indicating the completion in the case where the data transmission is completed, for example, the case of terminating the measurement by the timer activated in a short period of time after a considerable time has elapsed since transmitting the third preamble PS. In this case, the communication device 20 of the other wireless communication system 1-2 is capable of recognizing that the transmission channel will be in an idle state in a short period of time from the fact that the measurement by the timer corresponding to the detection of the third preamble PS is terminated (S49A, S49B).

### (Fifth example)

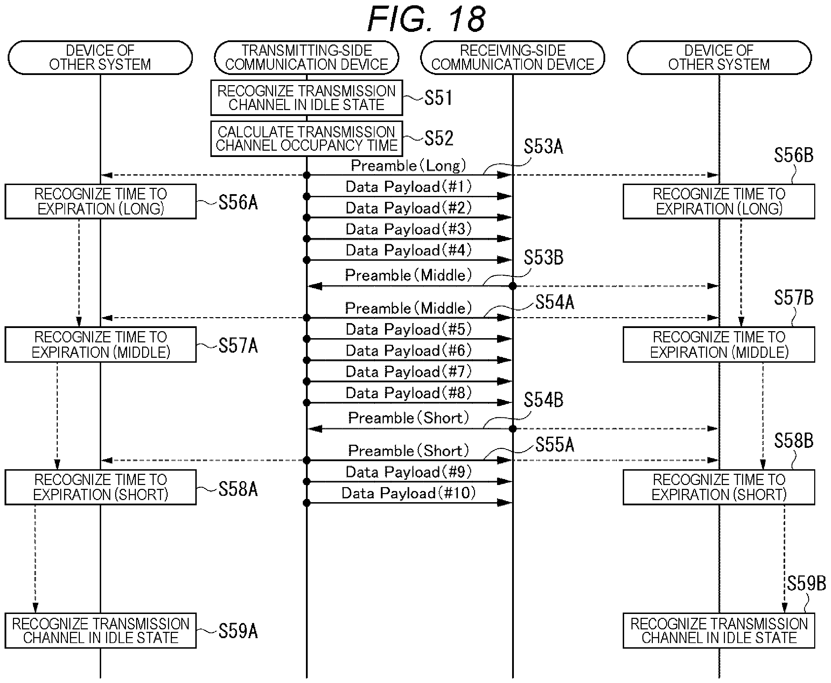

Fig. 18 illustrates a fifth example of an access control sequence depending on the type of the training pattern to which the present technology is applied.

Fig. 18 is a sequence diagram illustrating the transmission of a data frame in small amounts from the transmitting-side communication device 10Tx to the receiving-side communication device 10Rx in the wireless LAN system 1-1. This sequence diagram also illustrates that a training pattern depending on the occupancy condition of the transmission channel is replied from the receiving-side communication device 10Rx to the transmitting-side communication device 10Tx.

The transmitting-side communication device 10Tx, when recognizing that the transmission channel is in an idle state (S51), first calculates the transmission channel occupancy time of the data frame to be transmitted (S52) and selects the training pattern depending on the duration. The recognition that the transmission channel is in an idle state is made using the detection status of the training pattern sent from the communication device 20 of the other wireless communication system 1-2 on the transmission channel on the basis of the access control sequence described above.

Here, since the occupancy time of the transmission channel is long in total, the first preamble PL is selected first and transmitted with being attached to the beginning of the data frame (S53A). After that, data payloads (Data Payload (#1) to Data Payload (#4)) are sequentially transmitted as the data payload in the signal format set by the wireless LAN system 1-1.

In this event, the receiving-side communication device 10Rx selects and sends the second preamble PM indicating the occupancy time of the transmission channel to the transmitting-side communication device 10Tx as a reply (S53B).

Subsequently, the transmitting-side communication device 10Tx attaches the second preamble PM as a mid-amble depending on the time that the transmission channel is kept used and then transmits data payloads (Data Payload (#5) to Data Payload (#8)) in a sequential manner (S54A) .

In this event, the receiving-side communication device 10Rx selects and sends the third preamble PS indicating the occupancy time of the transmission channel to the transmitting-side communication device 10Tx as a reply (S54B).

Furthermore, the transmitting-side communication device 10Tx attaches the third preamble PS as a mid-amble depending on the time that the transmission channel is kept used and then transmits data payloads (Data Payload (#9) to Data Payload (#10)) in a sequential manner (S55A).

The receiving-side communication device 10Rx decodes the data payloads (Data Payload (#1) to Data Payload (#10)) depending on parameters described in the PLCP header or the like. This is because the data payload transmitted following the first preamble PL, the second preamble PM, and the third preamble PS transmitted from the transmitting-side communication device 10Tx has a frame structure defined by the wireless LAN system 1-1.

On the other hand, the communication device 20 of the other wireless communication system 1-2, which sequentially detects the first preamble PL, the second preamble PM, and the third preamble PS transmitted from the transmitting-side communication device 10Tx, is capable of recognizing the occupancy time of the transmission channel depending on the type of training patterns though the signal format defined in the wireless LAN system 1-1 fails to be decoded.

In other words, the communication device 20 of the other wireless communication system 1-2 is capable of recognizing that the transmission channel is occupied over the maximum duration defined by the first preamble PL (S56A, S56B), recognizing that the transmission channel is occupied over the middle period of time defined in the second preamble PM (S57A, S57B), and recognizing that the transmission channel is occupied in the short period of time defined by the third preamble PS (S58A, S58B).

Then, the communication device 20 of the other wireless communication system 1-2 activates a timer for measuring the time corresponding to the duration recognized by each training pattern, which makes it possible to recognize the time during when the transmission channel is in use for each training pattern.

After that, the communication device 20 of the other wireless communication system 1-2 is capable of recognizing that the transmission channel is in an idle state from the fact that the measurement by the timer corresponding to the detection of the third preamble PS is terminated (S59A, S59B).

### (Sixth example)

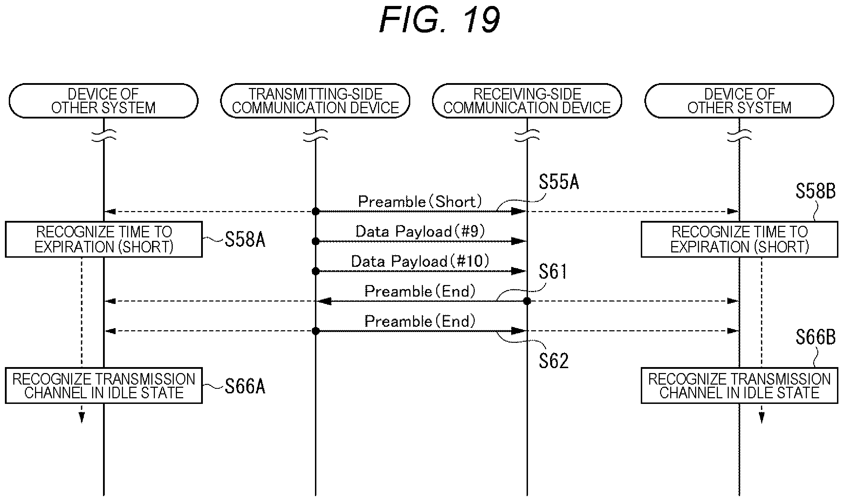

Fig. 19 illustrates a sixth example of an access control sequence depending on the type of the training pattern to which the present technology is applied.

In Fig. 19, as illustrated in the access control sequence illustrated in Fig. 18, the communication device 20 of the other wireless communication system 1-2 is capable of detecting the third preamble PS transmitted from the transmitting-side communication device 10Tx and recognizing that the transmission channel is occupied in a short period of time defined by this third preamble PS (S58A, S58B).

According to this, the communication device 20 of the other wireless communication system 1-2 in contact with the transmitting-side communication device 10Tx and the receiving-side communication device 10Rx is originally desirable not to be accessed. However, even the communication device 20 can efficiently detect the training pattern given from the transmitting-side communication device 10Tx and the receiving-side communication device 10Rx, providing a more reliable access control method.

In other words, in the wireless LAN system 1-1, upon the completion of the data transmission, both the receiving-side communication device 10Rx and the transmitting-side communication device 10Tx transmit the fourth preamble PE indicating the completion (S61, S62). Thus, it is possible to notify more reliably the communication device 20 of the other wireless communication system 1-2 of the fact that the transmission channel is in an idle state and is released without waiting for the termination of the measurement by the timer corresponding to the detection of the third preamble PS (S66A, S66B).

### (Seventh example)

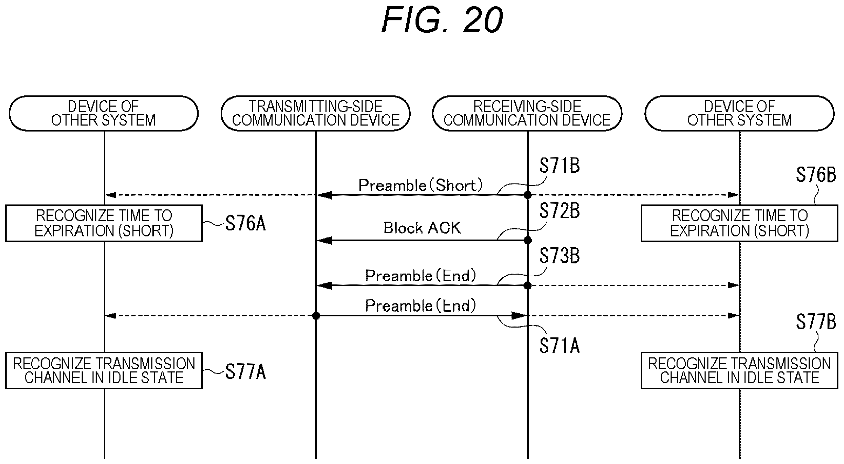

Fig. 20 illustrates a seventh example of an access control sequence depending on the type of the training pattern to which the present technology is applied.

Fig. 20 is a sequence diagram illustrating that the receiving-side communication device 10Rx sends a data receipt acknowledgment to the transmitting-side communication device 10Tx as a reply upon the transmission and reception of data between the transmitting-side communication device 10Tx and the receiving-side communication device 10Rx in the wireless LAN system 1-1.

In these procedure steps, for example, the receiving-side communication device 10Rx, when receiving all the data frames, sends a block ACK frame with a training pattern type attached, as a reply to the transmitting-side communication device 10Tx. This training pattern is the pattern to which the present technology is applied.

The receiving-side communication device 10Rx transmits a short ACK frame to the transmitting-side communication device 10Tx and so transmits the block ACK frame with the third preamble PS attached to the beginning (S71B, S72B).

Moreover, the receiving-side communication device 10Rx receives all the data, and so the data frame is not retransmitted. Thus, the receiving-side communication device 10Rx also can transmit the fourth preamble PE indicating the release of the transmission channel as well(S73B). Furthermore, the transmitting-side communication device 10Tx that has received the block ACK frame can also transmit the fourth preamble PE indicating the release of the transmission channel (S71A).

On the other hand, the communication device 20 of the other wireless communication system 1-2, which sequentially detects the third preamble PS and the fourth preamble PE transmitted from the receiving-side communication device 10Rx or the transmitting-side communication device 10Tx, is capable of recognizing the transmission channel occupancy time and the release of the transmission channel depending on the training pattern type even if the communication device 20 fails to decode the signal format defined by the wireless LAN system 1-1.

In other words, the communication device 20 of the other wireless communication system 1-2 is capable of recognizing that the transmission channel is occupied in the short period of time defined by the third preamble PS and activating the timer that measures the time corresponding to the duration, which allows the time when the transmission channel is in use to recognize (S76A, S76B).

Further, the communication device 20 of the other wireless communication system 1-2, when detecting the fourth preamble PE transmitted from the receiving-side communication device 10Rx or the transmitting-side communication device 10Tx, is capable of recognizing that the transmission channel is in an idle state and is released without waiting for the termination of the measurement by the timer corresponding to the detection of the third preamble PS (S77A, S77B).

### (Eighth example)

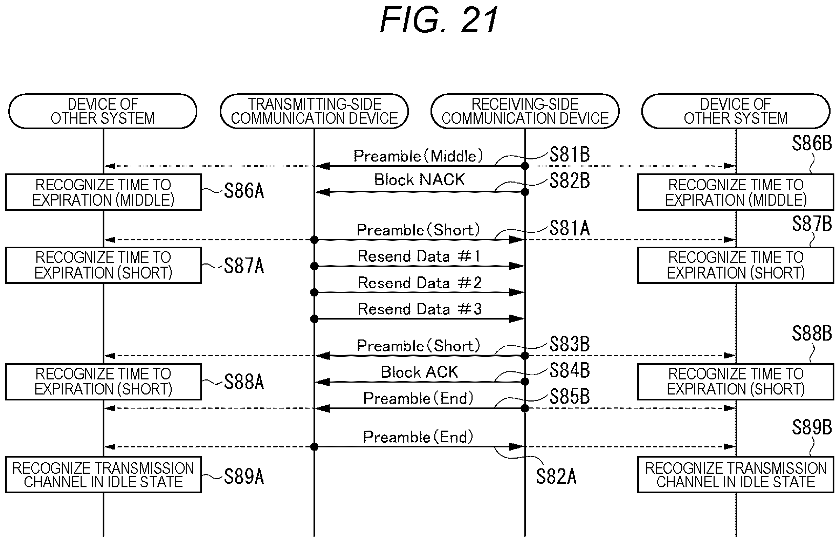

Fig. 21 illustrates an eighth example of an access control sequence depending on the type of the training pattern to which the present technology is applied.

Fig. 21 is a sequence diagram illustrating that the receiving-side communication device 10Rx sends a data receipt acknowledgment to the transmitting-side communication device 10Tx as a reply if there is undelivered data upon the transmission and reception of data between the transmitting-side communication device 10Tx and the receiving-side communication device 10Rx in the wireless LAN system.

In these procedure steps, the receiving-side communication device 10Rx, when failing to receive some or all the data, sends a reply to the transmitting-side communication device 10Tx as a block NACK frame with a training pattern type attached. This training pattern is the pattern to which the present technology is applied.

The receiving-side communication device 10Rx requests the transmitting-side communication device 10Tx to retransmit the data, so the receiving-side communication device 10Rx calculates the transmission channel occupancy time of the data to be retransmitted and selects a training pattern corresponding to the calculated transmission channel occupancy time. In one example, the receiving-side communication device 10Rx transmits a block NACK frame with NACK information described and the second preamble PM being attached to the beginning in a case where retransmission is possible in a middle occupancy time (S81B, S82B).

Moreover, the retransmission of the data after that can eliminate the need to transmit the fourth preamble PE indicating the completion.

The transmitting-side communication device 10Tx that receives the block NACK frame specifies the data that needs to be retransmitted, calculates the time required for retransmitting the data, and selects the training pattern corresponding to the transmission channel occupancy time. In one example, as retransmission data, Resend Data (#1) to Resend Data (#3) are sequentially transmitted, with the third preamble PS being attached to the beginning (S81A).

The receiving-side communication device 10Rx decodes the retransmission data (Resend Data (#1) to Resend Data (#3)) following the third preamble PS, and if correctly receiving all the data, sends the block ACK frame described above as a reply.

The subsequent transmission sequence steps for block ACK frame (S83B, S84B, S85B, S82A) are similar to the transmission sequence steps for block ACK frame of Fig. 20 described above (S71B, S72B, S73B, S71A), so the description thereof is omitted.

On the other hand, the communication device 20 of the other wireless communication system 1-2, which sequentially detects the second preamble PM, the third preamble PS, and the fourth preamble PE transmitted from the receiving-side communication device 10Rx or the transmitting-side communication device 10Tx, is capable of recognizing the transmission channel occupancy time and the release of the transmission channel depending on the training pattern type even if the communication device 20 fails to decode the signal format defined by the wireless LAN system 1-1.

In other words, the communication device 20 of the other wireless communication system 1-2 is capable of recognizing that the transmission channel is occupied over the middle period of time defined in the second preamble PM (S86A, S86B), and recognizing that the transmission channel is occupied in the short period of time defined by the third preamble PS (S87A, S87B, S88A, S88B) .

Then, the communication device 20 of the other wireless communication system 1-2 activates a timer for measuring the time corresponding to the duration recognized by each training pattern, which makes it possible to recognize the time during when the transmission channel is in use for each training pattern.

After that, the communication device 20 of the other wireless communication system 1-2, when detecting the fourth preamble PE transmitted from the receiving-side communication device 10Rx or the transmitting-side communication device 10Tx, is capable of recognizing that the transmission channel is in an idle state and is released (S89A, S89B).

### (Ninth example)

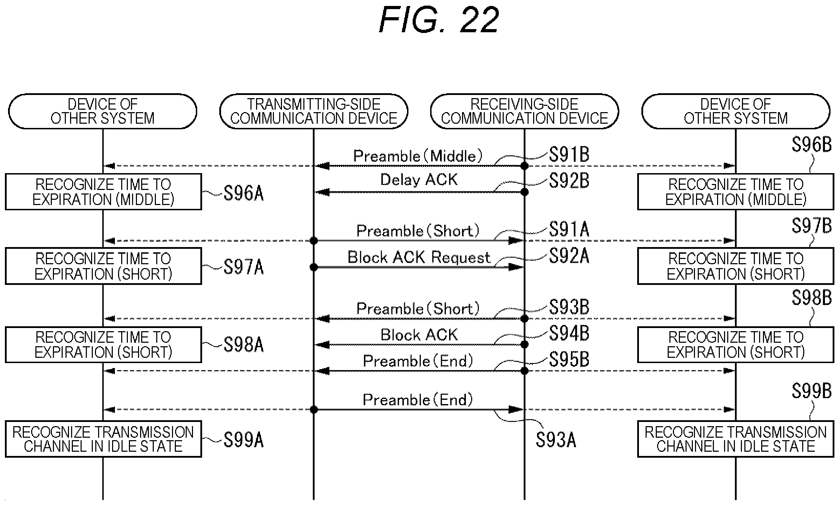

Fig. 22 illustrates a ninth example of an access control sequence depending on the type of the training pattern to which the present technology is applied.

Fig. 22 is a sequence diagram in which the fact that the ACK frame is delayed to be replied temporarily is replied to the transmitting-side communication device 10Tx. The receiving-side communication device 10Rx sends the block ACK frame (block NACK frame) as a reply when data is transmitted and received between the transmitting-side communication device 10Tx and the receiving-side communication device 10Rx in the wireless LAN system 1-1. In this case, if the ACK information is difficult to gather at a predetermined SIFS timing or if there is periodic use by the other wireless communication system 1-2, the transmission of the ACK frame is necessary to be delayed temporarily.

In this sequence, in consideration of the time for the determination of the block ACK frame in the receiving-side communication device 10Rx, the time when the transmission channel will be occupied is calculated, and a delay ACK frame to which the type of training pattern is attached is transmitted. This training pattern is a pattern to which the present technology is applied.

In one example, the receiving-side communication device 10Rx transmits the delay ACK frame, with the second preamble PM being attached to the beginning, to the transmitting-side communication device 10Tx in a case where data can be retransmitted in a middle occupancy time (S91B, S92B). In this event, it is unnecessary to transmit the fourth preamble PE indicating the completion, but if there is periodic use by the other wireless communication system 1-2, the fourth preamble PE indicating the completion can be transmitted.

The transmitting-side communication device 10Tx that receives the delay ACK frame transmits a block ACK request frame with the third preamble PS attached to the beginning at the timing when the ACK frame is enabled to be replied (S91A, S92A). In other words, the ACK exchange sequence of the block ACK request frame is completed in a short period of time, so the third preamble PS is attached and transmitted.

The receiving-side communication device 10Rx, when receiving the block ACK request frame following the third preamble PS transmitted from the transmitting-side communication device 10Tx, sends the block ACK frame (or block NACK frame) described above as a reply.

The subsequent sequence steps for block ACK frame (S93B, S94B, S95B, S93A) are similar to the block ACK frame transmission sequence steps of Fig. 20 described above (S71B, S72B, S73B, S71A), or the block ACK frame transmission sequence steps of Fig. 21 (S83B, S84B, S85B, S82A), so the description thereof is omitted.

On the other hand, the communication device 20 of the other wireless communication system 1-2, which sequentially detects the second preamble PM, the third preamble PS, and the fourth preamble PE transmitted from the receiving-side communication device 10Rx or the transmitting-side communication device 10Tx, is capable of recognizing the transmission channel occupancy time and the release of the transmission channel depending on the training pattern type even if the communication device 20 fails to decode the signal format defined by the wireless LAN system 1-1.

Moreover, the sequence steps in the communication device 20 of the other wireless communication system 1-2 (S96A to S99A, S96B to S99B) are similar to the sequence steps in the communication device of Fig. 21 described above (S86A to S89A, S86B to S89B), so the description thereof is omitted.

### (Interaction for Data Transmission)

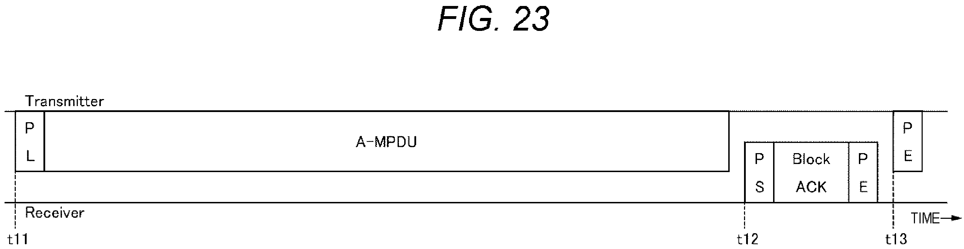

The interaction between the transmitting-side communication device 10Tx and the receiving-side communication device 10Rx upon data transmission is now described with reference to the timing charts of Figs. 23 to 28.

### (First example)

Fig. 23 illustrates a first example of interaction between the transmitting-side communication device 10Tx and the receiving-side communication device 10Rx upon data transmission.

In Fig. 23, the frame transmitted by the transmitting-side communication device 10Tx (Transmitter) is described from top to bottom in the figure, while the frame transmitted by the receiving-side communication device 10Rx (Receiver) is described from bottom to top in the figure. In addition, the direction of time is from left to right in the figure. Note that their relationship is similarly applied to other figures described later.

At time t11, the transmitting-side communication device 10Tx assumes an occupancy time of a transmission channel of a data payload (A-MPDU) to be transmitted, attaches the first preamble PL, and transmits the A-MPDU via the transmission channel.

At time t12, the receiving-side communication device 10Rx sends a block ACK frame as a reply depending on the reception condition of the A-MPDU transmitted via the transmission channel from the transmitting-side communication device 10Tx.

In other words, the receiving-side communication device 10Rx, when correctly receiving all the data, transmits the block ACK frame with the third preamble PS attached and also transmits the fourth preamble PE indicating the completion to notify that the transmission channel is released.

At time t13, the transmitting-side communication device 10Tx that receives the block ACK frame transmits the fourth preamble PE indicating the completion to notify that the transmission channel is released because all the data have been correctly received by the receiving-side communication device 10Rx.

### (Second example)

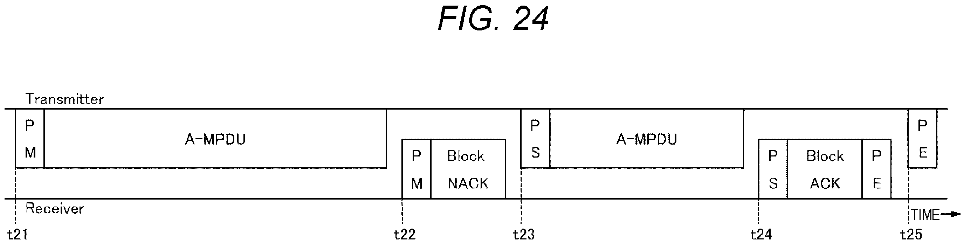

Fig. 24 illustrates a second example of interaction between the transmitting-side communication device 10Tx and the receiving-side communication device 10Rx upon data transmission.

Fig. 24 illustrates the procedure for transmitting a block NACK frame from the receiving-side communication device 10Rx to the transmitting-side communication device 10Tx in the case where the entirety or a part of the data payload (A-MPDU) fails to be received correctly.

At time t21, the transmitting-side communication device 10Tx assumes an occupancy time of a transmission channel of a data payload (A-MPDU) to be transmitted, attaches the second preamble PM, and transmits the A-MPDU via the transmission channel.

At time t22, in a case where some data of the A-MPDU received via the transmission channel is undelivered, the receiving-side communication device 10Rx calculates the transmission channel occupancy time of the data to be retransmitted, selects the second preamble PM that corresponds to the calculated time, and transmits the block NACK frame via the transmission channel.

At time t23, the transmitting-side communication device 10Tx that receives the block NACK frame specifies the data that needs to be retransmitted, calculates the transmission channel occupancy time, selects the third preamble PS that corresponds to the calculated time, and transmits the data to be retransmitted (A-MPDU) via the transmission channel.

After that, at time t24 and time t25 which are similar to time t12 and time t13 in Fig. 23, respectively, the receiving-side communication device 10Rx sends the block ACK frame with the third preamble PS and the fourth preamble PE attached as a reply depending on the reception condition of the A-MPDU. The transmitting-side communication device 10Tx transmits the fourth preamble PE.

### (Third example)

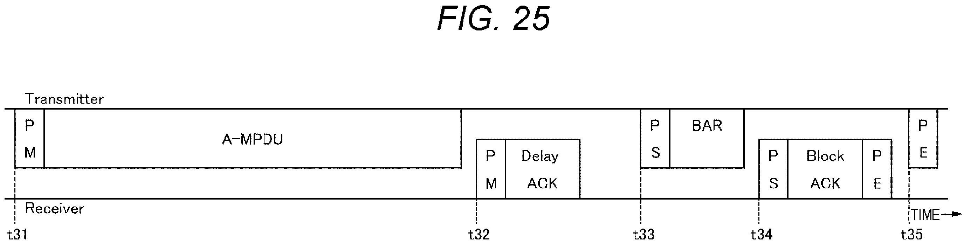

Fig. 25 illustrates a third example of interaction between the transmitting-side communication device 10Tx and the receiving-side communication device 10Rx upon data transmission.

Fig. 25 illustrates the procedure for sending a delay ACK frame as a reply from the receiving-side communication device 10Rx to the transmitting-side communication device 10Tx, then transmitting the block ACK frame to the receipt of the block ACK request frame.

At time t31, the transmitting-side communication device 10Tx assumes an occupancy time of a transmission channel of a data payload (A-MPDU) to be transmitted, attaches the second preamble PM, and transmits the A-MPDU via the transmission channel.

At time t32, the receiving-side communication device 10Rx, when failing to judge the reception condition of the A-MPDU received via the transmission channel, calculates the time required to gather ACK information or the time used periodically in the other wireless communication systems 1-2, selects the training pattern corresponding to the calculated time, and transmits the delay ACK frame with the training pattern attached. In this example, a middle amount of time is judged to be required, and the second preamble PM is attached to the delay ACK frame.

At time t33, the transmitting-side communication device 10Tx transmits a block ACK request frame to the receiving-side communication device 10Rx via the transmission channel as needed at a timing considering the processing time in the receiving-side communication device 10Rx. This block ACK request frame is a temporary exchange of information, so the third preamble PS is attached.

After that, at time t34 and time t35 which are similar to time t12 and time t13 in Fig. 23, respectively, the receiving-side communication device 10Rx sends the block ACK frame with the third preamble PS and the fourth preamble PE attached as a reply depending on the reception condition of the A-MPDU. The transmitting-side communication device 10Tx transmits the fourth preamble PE.

### (Fourth example)

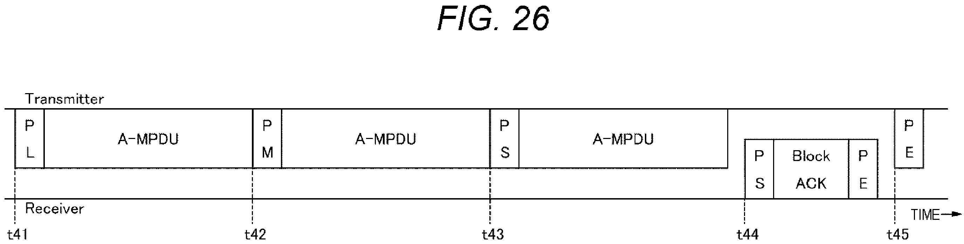

Fig. 26 illustrates a fourth example of interaction between the transmitting-side communication device 10Tx and the receiving-side communication device 10Rx upon data transmission.

Fig. 26 illustrates the procedure for assuming the transmission channel occupancy time of the data payload (A-MPDU) transmitted from the transmitting-side communication device 10Tx and attaching the first preamble PL to transmit the first A-MPDU, and then, after transmitting the predetermined occupancy time or amount of data, for selecting and transmitting a training pattern corresponding to the remaining time as a mid-amble.

At time t41, the transmitting-side communication device 10Tx assumes an occupancy time of a transmission channel of a data payload (A-MPDU) to be transmitted, attaches the first preamble PL, and transmits the first A-MPDU via the transmission channel.

At time t42, the transmitting-side communication device 10Tx, after transmitting the predetermined occupancy time or amount of data, selects and transmits the second preamble PM corresponding to the remaining time as a mid-amble, and then transmits the subsequent data payload (A-MPDU) via the transmission channel.

At time t43, the transmitting-side communication device 10Tx, after transmitting the predetermined occupancy time or amount of data again, selects and transmits the third preamble PS corresponding to the remaining time as a mid-amble, and then transmits the remaining data payload (A-MPDU) via the transmission channel.

After that, at time t44 and time t45 which are similar to time t12 and time t13 in Fig. 23, respectively, the receiving-side communication device 10Rx sends the block ACK frame with the third preamble PS and the fourth preamble PE attached as a reply depending on the reception condition of the A-MPDU. The transmitting-side communication device 10Tx transmits the fourth preamble PE.

### (Fifth example)

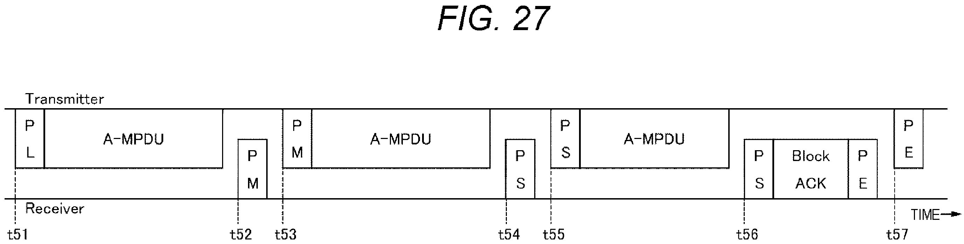

Fig. 27 illustrates a fifth example of interaction between the transmitting-side communication device 10Tx and the receiving-side communication device 10Rx upon data transmission.

In Fig. 27, the occupancy time of the transmission channel of the data payload (A-MPDU) transmitted by the transmitting-side communication device 10Tx is assumed, the first preamble PL is attached to transmit the first A-MPDU, and then, a data frame is transmitted in small amounts with a predetermined occupancy time or amount of data.

At time t51, the transmitting-side communication device 10Tx assumes an occupancy time of a transmission channel of a data payload (A-MPDU) to be transmitted, attaches the first preamble PL, and transmits the first A-MPDU via the transmission channel.

After that, the training pattern corresponding to the remaining occupancy time is selected and transmitted from the receiving-side communication device 10Rx. At time t52, the receiving-side communication device 10Rx selects and transmits the second preamble PM.

At time t53, the transmitting-side communication device 10Tx transmits the remaining data payload (A-MPDU) again in small amounts, following the second preamble PM corresponding to the training pattern sent from the receiving-side communication device 10Rx.

At time t54, the receiving-side communication device 10Rx selects and transmits the third preamble PS corresponding to the remaining occupancy time.

At time t55, the transmitting-side communication device 10Tx transmits the remaining data payload (A-MPDU) via the transmission channel, following the third preamble PS corresponding to the training pattern sent from the receiving-side communication device 10Rx.

After that, at time t56 and time t57 which are similar to time t12 and time t13 in Fig. 23, respectively, the receiving-side communication device 10Rx sends the block ACK frame with the third preamble PS and the fourth preamble PE attached as a reply depending on the reception condition of the A-MPDU. The transmitting-side communication device 10Tx transmits the fourth preamble PE.

### (Sixth example)

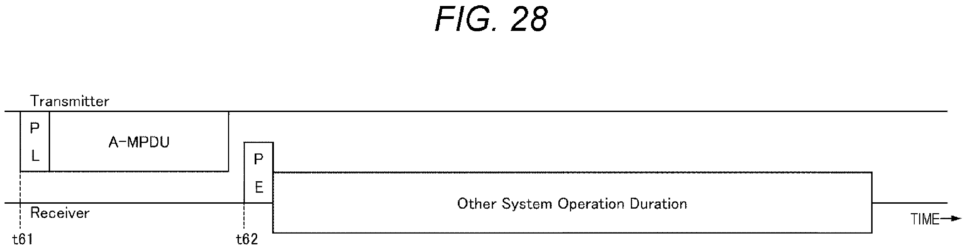

Fig. 28 illustrates a sixth example of interaction between the transmitting-side communication device 10Tx and the receiving-side communication device 10Rx upon data transmission.

Fig. 28 illustrates the procedure in which the receiving-side communication device 10Rx, for example, when detecting a training pattern from the communication device 20 of the other wireless communication system 1-2 and so is made difficult to receive data, notifies the transmitting-side communication device 10Tx of the difficulty of data reception by, for example, attaching the fourth preamble PE indicating the completion.

At time t61, the transmitting-side communication device 10Tx assumes an occupancy time of a transmission channel of a data payload (A-MPDU) to be transmitted, attaches the first preamble PL, and transmits the A-MPDU via the transmission channel.

At time t62, the receiving-side communication device 10Rx, when detecting that the transmission channel is unavailable because the communication device 20 of the other wireless communication system 1-2 is in use, selects and transmits the fourth preamble PE.

In other words, the transmitting-side communication device 10Tx transmits the data payload using the first preamble PL to transmit a large number of data payloads (A-MPDUs). In this case, if the other wireless communication system 1-2 uses the transmission channel when the receiving-side communication device 10Rx transmits the training pattern, for example, as in the sequence of Fig. 25 or the like, the transmission channel is unavailable after that. In this case, the fact that the transmission channel is no longer available is notified by changing the training pattern type to the fourth preamble PE.

The transmitting-side communication device 10Tx that detects the fourth preamble PE interrupts the subsequent transmission of the data payload (A-MPDU). This makes it possible to inform the transmitting-side communication device 10Tx that the receiving-side communication device 10Rx is incapable of receiving data satisfactorily due to the influence of the other wireless communication system 1-2.

### (Exemplary Configuration of Communication Device)

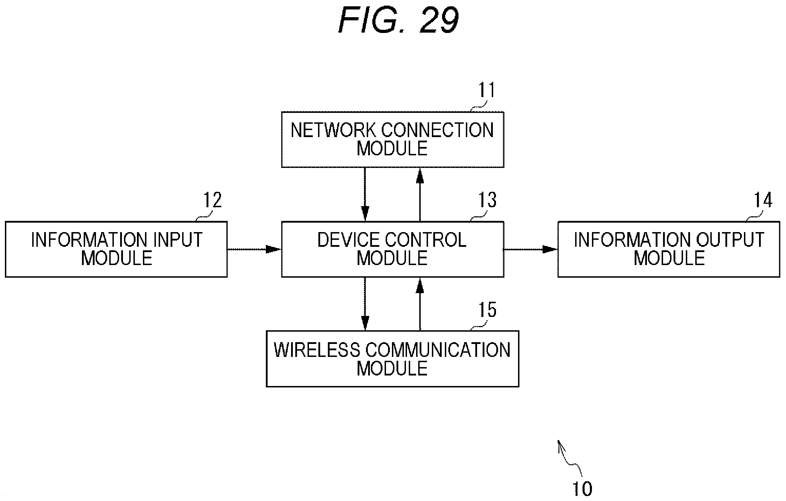

Fig. 29 illustrates an exemplary configuration of a communication device to which the present technology is applied.

The communication device 10 illustrated in Fig. 29 can be the access point AP10 or the communication terminal STA10 in the wireless LAN system 1-1 (Fig. 1), that is, the transmitting-side communication device 10Tx or the receiving-side communication device 10Rx.

In Fig. 29, the communication device 10 includes a network connection module 11, an information input module 12, a device control module 13, an information output module 14, and a wireless communication module 15.

The network connection module 11 includes a circuit that connects an optical fiber network or other communication lines to an Internet network via a service provider, for example, to function as the access point AP10. The network connection module 11 also includes peripheral circuits, a microcontroller, a semiconductor memory, and the like.

The network connection module 11 performs various processing operations relating to the Internet connection under the control of the device control module 13. In one example, the network connection module 11 is equipped with a function of a communication modem or the like for connecting with the Internet network in the case where the communication device 10 operates as the access point AP10.

The information input module 12 can be, for example, an input device, including push buttons, a keyboard, a touch panel, or the like. The information input module 12 inputs instruction-related information corresponding to the user's instruction to the device control module 13.

The device control module 13 can be, for example, a microprocessor, a microcontroller, or the like. The device control module 13 controls the parts (modules) to allow the communication device 10 to operate as the access point AP10 or the communication terminal STA10.

The device control module 13 performs various processing operations regarding the information provided from the network connection module 11, the information input module 12, or the wireless communication module 15. In addition, the device control module 13 provides the network connection module 11, the information output module 14, or the wireless communication module 15 with information obtained by the processing performed therein.

In one example, upon the data transmission, the device control module 13 provides the wireless communication module 15 with transmission data delivered from an application or the like in the upper-layer protocol. Upon the data reception, the device control module 13 delivers the reception data provided from the wireless communication module 15 to an application or the like in the upper-layer protocol.

The information output module 14 can be, for example, an output device including a display device such as a liquid crystal display, an organic EL display, or a light-emitting diode (LED) display, and a speaker that outputs voice or music.

The information output module 14 allows necessary information to be displayed to the user on the basis of the information provided from the device control module 13. In this regard, the information processed by the information output module 14 includes, for example, the operating state of the communication device 10, information obtained via the Internet network, or the like.

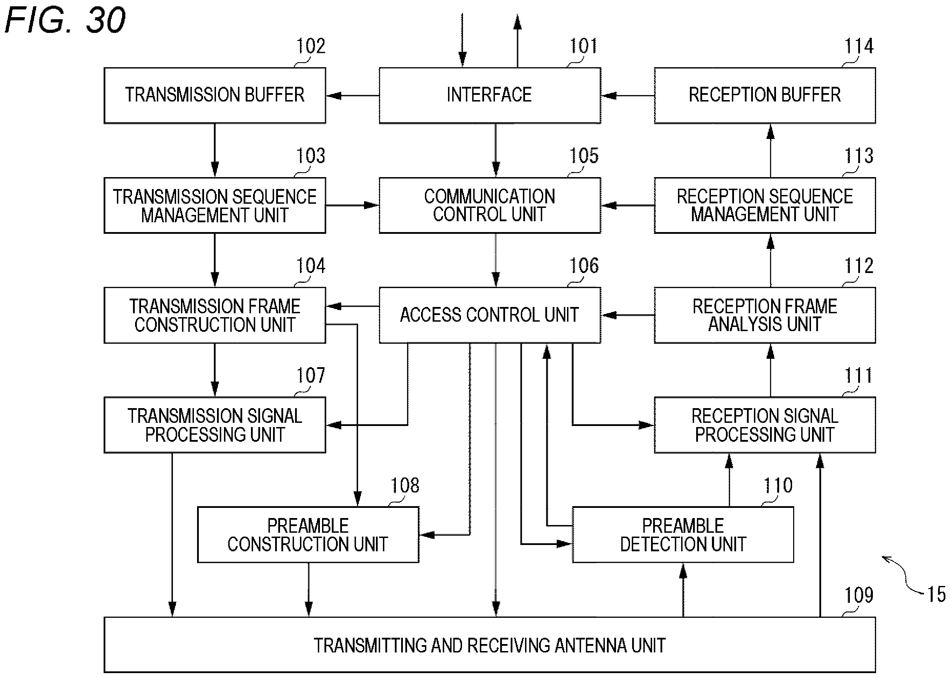

The wireless communication module 15 includes, for example, a wireless chip, peripheral circuits, a microcontroller, a semiconductor memory, and the like. The wireless communication module 15 performs various processing operations relating to wireless communication under the control of the device control module 13. Details of the configuration of the wireless communication module 15 are described later with reference to Fig. 30.

Moreover, the description is herein given of an example of a wireless communication module equipped with a wireless communication chip and peripheral circuits, but the present technology is applicable not only to the wireless communication module but also to, for example, a wireless communication chip, a wireless communication LSI, and the like. Furthermore, the wireless communication module optionally includes an antenna.

Further, the communication device 10 of Fig. 29 can include the device control module 13 and the wireless communication module 15 as indispensable components and can include the network connection module 11, the information input module 12, and the information output module 14 as optional components.

In other words, only modules required for each communication device 10 operating as the access point AP10 or the communication terminal STA10 can be included, and unnecessary parts can be simplified or not incorporated.

More specifically, for example, the network connection module 11 can be incorporated only in the access point AP10, and the information input module 12 or the information output module 14 can be incorporated only in the communication terminal STA10.

### (Exemplary Configuration of Wireless Communication Module)

Fig. 30 illustrates an exemplary configuration of the wireless communication module 15 of Fig. 29.

The configuration used for data transmission in the wireless communication module 15 includes an interface 101, a transmission buffer 102, a transmission sequence management unit 103, and a transmission frame construction unit 104. The interface 101 exchanges various types of information and data with the outside. The transmission buffer 102 temporarily stores transmission data. The transmission sequence management unit 103 manages the transmission data sequence. The transmission frame construction unit 104 converts transmission data into the predetermined frame format.

In addition to the components described above, the present technology is further provided with a communication control unit 105, an access control unit 106, a transmission signal processing unit 107, a preamble construction unit 108, a preamble detection unit 110, and a reception signal processing unit 111.

The communication control unit 105 controls the execution of transmission of data and reception of transmitted data in the wireless LAN system.

The access control unit 106 recognizes the use condition of the other wireless communication system on the wireless transmission channel to control the execution of transmission and reception of a data frame or an ACK frame depending on the detection status of a common training pattern to which the present technology is applied.

The transmission signal processing unit 107 configures a data payload transmitted by the wireless LAN system as a predetermined A-MPDU frame. The preamble construction unit 108 constructs a preamble signal. In one example, the preamble construction unit 108 selects a common training pattern to which the present technology is applied and attaches the pattern to the beginning or the middle of the frame as needed.

A transmitting and receiving antenna unit 109 controls an antenna for transmitting a transmission signal or receiving a reception signal.

The preamble detection unit 110 detects a predetermined preamble signal attached to a signal sent from the other wireless communication system on the transmission channel. The reception signal processing unit 111 processes the reception signal of the wireless LAN system following the predetermined preamble signal. In one example, the preamble detection unit 110 detects the common training pattern to which the present technology is applied.

The configuration used for data reception in the wireless communication module 15 includes a reception frame analysis unit 112, a reception sequence management unit 113, and a reception buffer 114. The reception frame analysis unit 112 extracts necessary data. The reception sequence management unit 113 manages the reception data sequence. The reception buffer 114 temporarily stores the reception data.

Moreover, in Fig. 30, the arrows between the blocks represent the flow and control of data (signals). Each block operates in cooperation with other blocks connected by the arrows to implement the function of the block.

In other words, for example, the access control unit 106 implements a function regarding the present technology (e.g., a function relating to the construction and detection of a training pattern). For this purpose, the access control unit 106 operates in cooperation with individually the transmission frame construction unit 104, the transmission signal processing unit 107, the preamble construction unit 108, the transmitting and receiving antenna unit 109, the preamble detection unit 110, the reception signal processing unit 111, and the reception frame analysis unit 112 under the control of the communication control unit 105.

In the wireless communication module 15 configured as described above, particularly the communication control unit 105 controls the access control unit 106 to perform the processing described below.

In other words, in the wireless communication module 15 of the communication device 10 (e.g., the transmitting-side communication device 10Tx such as the access point AP10), the communication control unit 105 allows a training pattern corresponding to the transmission channel occupancy time to be selected among a plurality of types of training patterns (e.g., the first, second, third, and fourth preambles PL, PM, PS, and PE). In addition, the communication control unit 105 also allows a signal with the selected training pattern attached (e.g., a data signal such as the data frame (data payload thereof) or a request signal such as the block ACK request frame) to be transmitted to the other communication device (e.g., the receiving-side communication device 10Rx or the communication device 20) via the transmission channel.

Further, in the wireless communication module 15 of the communication device 10 (e.g., the receiving-side communication device 10Rx such as the communication terminal STA10), the communication control unit 105 allows a training pattern corresponding to the transmission channel occupancy time to be selected among a plurality of types of training patterns (e.g., the first, second, third, and fourth preambles PL, PM, PS, and PE). In addition, the communication control unit 105 also allows a signal with the selected training pattern attached (e.g., a first receipt acknowledgment signal such as the block ACK frame, a second receipt acknowledgment signal such as the block NACK frame, and a third receipt acknowledgment signal such as the delay ACK frame) to be transmitted to the other communication device (e.g., the transmitting-side communication device 10Tx or the communication device 20) via the transmission channel.

### (Data Transmission Processing Procedure)

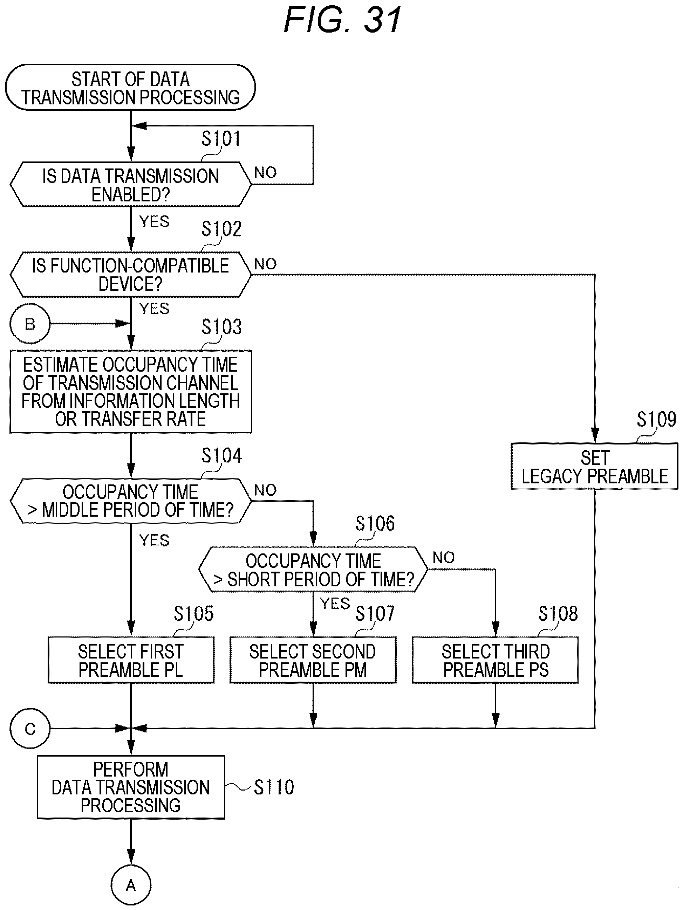

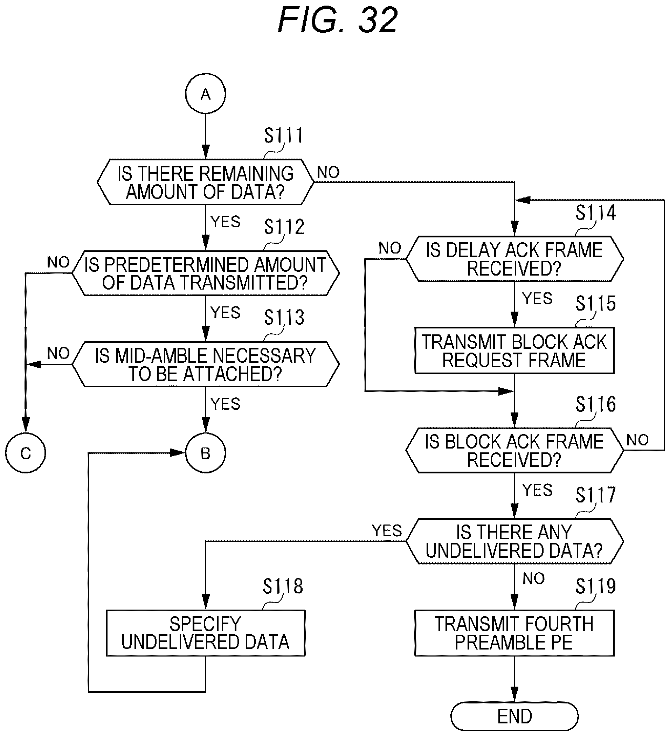

The procedure of data transmission processing executed by the communication device 10 is now described with reference to flowcharts of Figs. 31 and 32.

In the case where the operation is performed with a training pattern structure common to the other wireless communication system 1-2, the data transmission processing is the processing corresponding to the transmission operation by the transmitting-side communication device 10Tx that selects the type of training pattern corresponding to the occupancy time of the transmission channel.

The access control unit 106 first determines whether data transmission is enabled while serving as the wireless LAN system 1-1 (S101). If the communication by the communication device 30 of the other wireless LAN system 1-3 or the training pattern from the communication device 20 of the other wireless communication system 1-2 is undetected on the transmission channel, the access control unit 106 determines that the data transmission is enabled ("YES" in S101).

The access control unit 106 determines whether or not the receiving-side communication device 10Rx is a communication device (function-compatible device) capable of recognizing the structure of the training pattern to which the present technology is applied (S102). If it is determined that the device is the function-compatible device ("YES" in S102), the processing of steps S103 to S108 is executed.

In other words, the access control unit 106 acquires information such as the information length of the data to be transmitted or information indicating the transfer rate that can be sent. The access control unit 106 estimates the total time required for transmission by wireless communication, i.e., the transmission channel occupancy time on the basis of the acquired information (S103).

Then, if it is determined that the transmission channel occupancy time exceeds a predetermined middle duration ("YES" in S104), the preamble construction unit 108 selects the first preamble PL (S105). Further, if it is determined that the transmission channel occupancy time is less than the predetermined middle period of time and exceeds a predetermined short period of time ("NO" in S104 and "YES" in S106), the preamble construction unit 108 selects the second preamble PM (S107). If it is determined that the transmission channel occupancy time is less than the predetermined short period of time ("NO" in S104 and "NO" in S106), the preamble construction unit 108 selects the third preamble PS (S108).

Moreover, if it is determined in the decision processing of step S102 that the receiving-side communication device 10Rx is not the function-compatible device, the processing proceeds to step S109. In this case, the preamble construction unit 108 sets the preamble (legacy preamble) corresponding to the method in the past, assuming that the receiving-side communication device 10Rx is a device corresponding to the wireless LAN system in the past.

If step S105, S107, S108, or S109 is completed, the processing proceeds to step S110.

The transmission signal processing unit 107 performs data transmission processing and transmits a data payload following the selected training pattern or preamble (S110).

If step S110 is completed, the processing proceeds to step S111 of Fig. 32, and the access control unit 106 executes the decision processing of steps S111 to S113.

In other words, in a case where it is determined that there is a remaining amount of data to be transmitted ("YES" in S111) and it is further determined that a predetermined amount of data is transmitted ("YES" in S112), if it is determined to transmit as a frame structure that requires a mid-amble to attach in the middle of the data ("YES" in S113), the processing returns to step S103 of Fig. 31, sets the type of training pattern corresponding to the remaining amount of data and continues to transmit the data.

Further, if it is determined that the predetermined amount of data is not transmitted ("NO" in S112) and it is determined that the attachment of the mid-amble is unnecessary ("NO" in S113), the processing returns to step S110 of Fig. 31 and continues to perform the data transmission.

Then, if it is determined that the data is transmitted to the end and there is no remaining amount of data ("NO" in S111), the processing proceeds to step S114, and the access control unit 106 executes ACK framewaiting processing in steps S114 to S116.

In other words, if it is determined that the delay ACK frame is received ("YES" in S114), after a predetermined time has elapsed, the block ACK request frame is transmitted (S115), and it is determined whether a block ACK frame or a block NACK frame is transmitted from the receiving-side communication device 10Rx (S116).

Then, if it is determined that the self-destinated block ACK frame or block NACK frame is received ("YES" in S116), the access control unit 106 executes the processing for the undelivered data in steps S117 to S119.

In other words, if it is determined that the block NACK frame is received and there is any undelivered data ("YES" in S117), the undelivered data is specified on the basis of the block ACK information (S118), the processing returns to the step S103 of Fig. 31 and executes the data retransmission processing.

Further, if it is determined that the block ACK frame is received and there is no undelivered data ("NO" in S117), the fourth preamble PE indicating the completion is transmitted as necessary (S119). If step S119 is completed, the data transmission processing ends.

### (Access Control Processing)

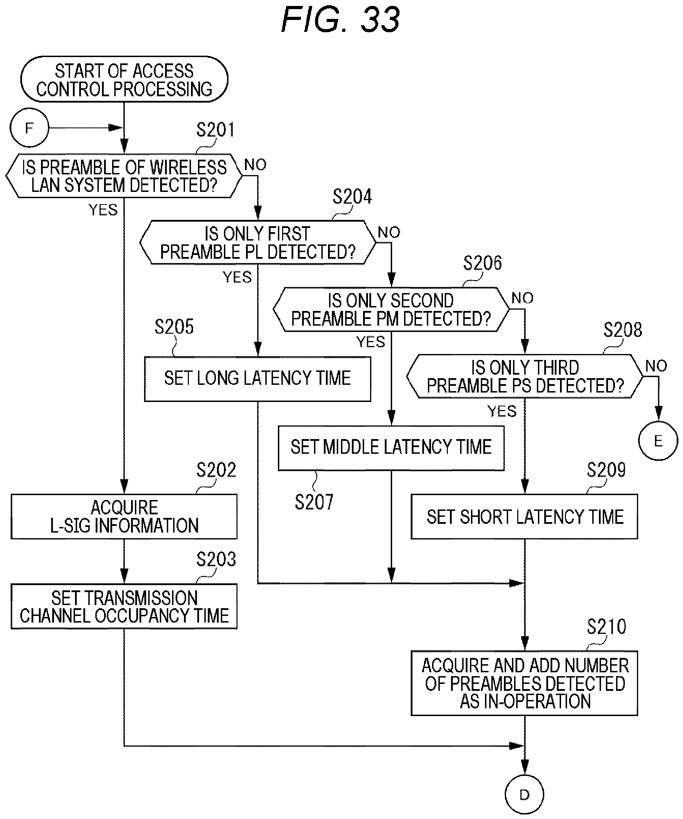

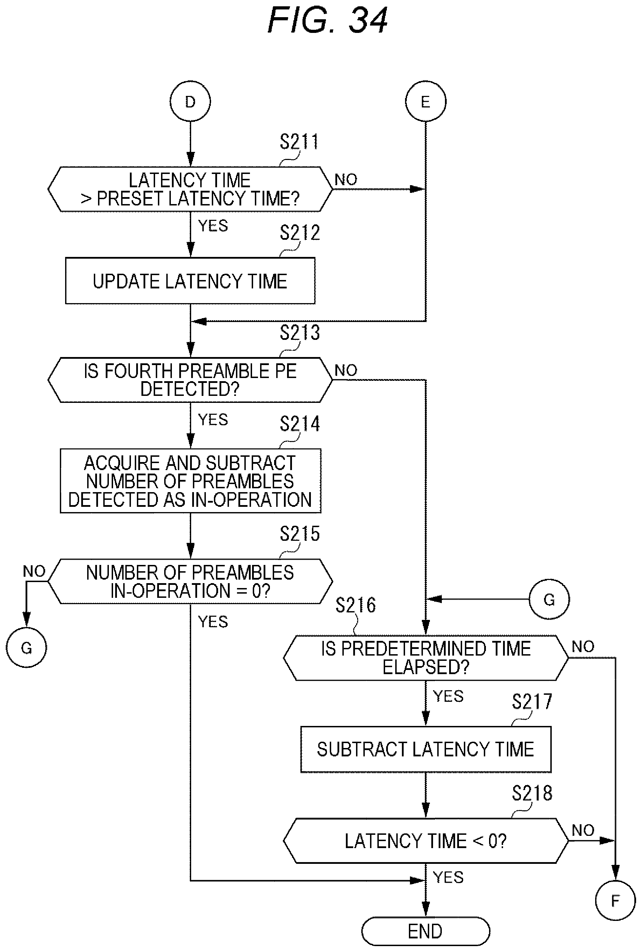

The procedure of access control processing executed by the communication device 10 is now described with reference to flowcharts of Figs. 33 and 34.

In the case where the operation is performed with a training pattern structure common to the other wireless communication system 1-2, this access control processing is the processing corresponding to the operation of the transmitting-side communication device 10Tx or the receiving-side communication device 10Rx that determines the use condition of the transmission channel depending on the type of the detected training pattern.

First, in the decision processing of step S201, if it is determined that the preamble signal of the predetermined wireless LAN system is detected ("YES" in S201), or if it is determined that the preamble signal to which the present technology is applied is detected, but the preamble signal has a signal format defined as the frame of the wireless LAN system thereafter ("YES" in S201), the access control unit 106 allows the processing of steps S202 and S203 to be executed.

In other words, the L-SIG information is acquired from the PLCP header (S202), and the transmission channel occupancy time is set by estimating the occupancy time of the transmission channel (S203).

On the other hand, if it is determined in the decision processing of step S201 that the preamble signal of the wireless LAN system is undetected ("NO" in S201), the processing proceeds to step S204, and the access control unit 106 executes the processing of S204 to S210.

In other words, if only the first preamble PL is detected ("YES" in S204), the transmission channel is set to be occupied for the maximum latency time as a long latency time (S205). Further, if only the second preamble PM is detected ("YES" in S206), the transmission channel is set to be occupied for a middle latency time (S207). Further, if only the third preamble PS is detected ("YES" in S208), the transmission channel is set to be occupied for a short period of time (S209).

Then, in the access control unit 106, the number of these training patterns that are in operation and activated (hereinafter called the number of preambles detected as in-operation) is acquired, and the number of preambles detected as in-operation is added and managed each time (S210).

If step S203 or S210 is completed, the processing proceeds to step S211 of Fig. 34, and the access control unit 106 executes the processing of steps S211 to S218.

If it is determined in the decision processing of step S211 that the set latency time value is larger than the preset latency time value ("YES" in S211), the latency time is updated as necessary (S212). If step S212 is completed or it is determined that the decision processing of step S211 is a negative result ("NO" in S211), the processing proceeds to step S213.

Moreover, if it is determined that none of the first preamble PL, the second preamble PM, and the third preamble PS is detected ("NO" in S204, "NO" in S206, and "NO" in S208), the processing proceeds to step S213 of Fig. 34.

If it is determined in the decision processing of step S213 that the fourth preamble PE is detected ("YES" in S213), the number of preambles detected as in-operation is acquired, and the subtraction by that number is performed (S214).

Then, if it is determined in the decision processing of step S215 that the number of preambles in operation such as the first preamble PL is zero on the basis of the number of preambles detected as in-operation ("YES" in S215), the access control processing ends. On the other hand, when it is determined that the number of preambles in operation such as the first preamble PL is not zero ("NO" in S215), the processing proceeds to step S216 and the subtraction operation continues.

Further, if it is determined in the decision processing of step S213 that the fourth preamble PE is undetected ("NO" in S213), the processing proceeds to step S216.

If it is determined in the decision processing of step S216 that the preamble such as the first preamble PL, the second preamble PM, the third preamble PS, and the fourth preamble PE is undetected by the lapse of a predetermined time ("YES" in S216), the processing proceeds to step S217. Then, the latency time is subtracted in decremental manners (S217), and if it is determined that the latency time is zero ("YES" in S218), the access control processing ends. On the other hand, if it is determined in the decision processing of step S218 that the latency time is not zero ("NO" in S218), the processing proceeds to step S201 of Fig. 33, and the subtraction operation continues.

### (Data Reception Processing Procedure)

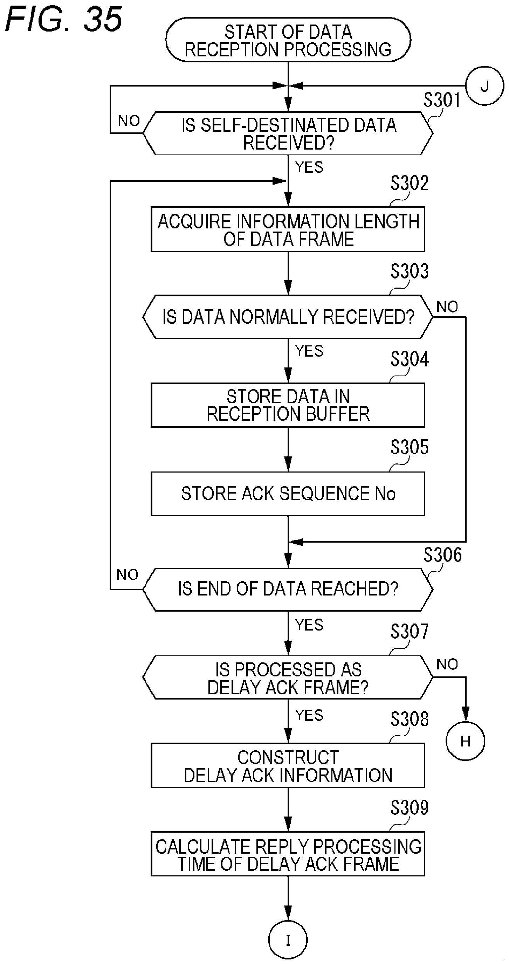

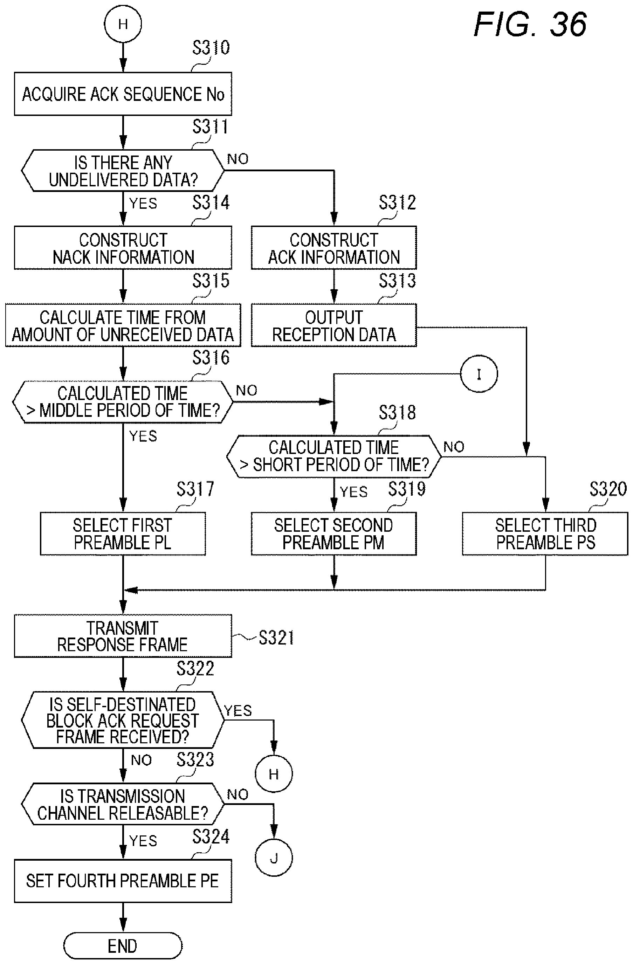

The procedure of data reception processing executed by the communication device 10 is now described with reference to flowcharts of Figs. 35 and 36.

In the case where the operation is performed with a training pattern structure common to the other wireless communication system 1-2, the data reception processing is the processing corresponding to the reception operation by the receiving-side communication device 10Rx that selects the type of training pattern and transmits information such as ACK frame corresponding to the occupancy time of the transmission channel.

In this processing, the access control unit 106 determines whether or not a self-destinated data frame is received by the reception signal processing unit 111 after the detection of the predetermined preamble signal by the preamble detection unit 110 (S301). If it is determined that the self-destinated data frame is received ("YES" in S301), the processing of steps S302 to S306 is executed.

In other words, the reception signal processing unit 111 acquires the information length (Length) of the data frame (S302) and determines whether or not the data is normally received in predetermined units of data (units of MPDUs) (S303). In addition, the reception signal processing unit 111 stores only the correctly received data in the reception buffer 114 (S304) and stores the ACK sequence number (No) of the received data (MPDU) (S305).

Then, these series of reception processing steps are executed until the end of the data (A-MPDU frame) is reached (S306). If it is determined in the decision processing of step S306 that the end of the data is reached ("YES" in S306), the processing proceeds to step S307.

Further, if it is determined in the decision processing of step S307 that the data is to be processed as a delay ACK frame, such as a case the receiving-side communication device 10Rx fails to gather ACK information by a predetermined time or a case where the transmission channel is periodically used by the other wireless communication system 1-2 ("YES" in S307), the delay ACK information is constructed (S308). Then, the processing time required to send the delay ACK frame as a reply or the time used periodically by the other wireless communication system 1-2 is calculated (S309). Then, the processing proceeds to step S318 of Fig. 36, and the training pattern selection processing is executed.

In other words, if it is determined that the calculated time is assumed to be longer than the predetermined short latency time ("YES" in S318), the second preamble PM is selected (S319). On the other hand, if it is determined that the calculated time is shorter than the predetermined short latency time ("NO" in S318), the third preamble PS is selected (S320).

Further, if it is determined in the decision processing of step S307 that the data is not processed as the delay ACK frame, the processing proceeds to step S310 of Fig. 36. The ACK sequence number (No) of the received data is acquired (S310), and the presence or absence of undelivered data is determined (S311).

In this step, if it is determined in the decision processing of step S311 that there is no undelivered data ("NO" in S311), the processing proceeds to step S312, and the processing of steps S312, S313, and S320 is executed.

In other words, the block ACK information is constructed (S312), and the data received and stored in the reception buffer 114 is output via the interface 101 (S313). Then, the processing proceeds to step S320, where the third preamble PS is selected (S320), and the block ACK frame is constructed.

On the other hand, if it is determined in the decision processing of step S311 that there is any undelivered data ("YES" in S311), the processing proceeds to step S314, and the processing of steps S314 to S320 is executed.

In other words, the undelivered data is constructed as block NACK information (S314), and the time required for transmission is calculated from the information amount of the unreceived data (MPDU) (amount of unreceived data) (S315). The training pattern corresponding to the time required for retransmission is selected depending on the calculated time (S316 to S320).

Specifically, if it is determined that the calculated time is assumed to be longer than a predetermined middle latency time ("YES" in S316), then the first preamble PL is selected (S317). If it is determined that the calculated time is less than the predetermined middle period of time and exceeds a predetermined short period of time ("YES" in S318), then the second preamble PM is selected (S319). If it is determined that the time is less than the predetermined middle period of time and is less than the predetermined short period of time ("NO" in S318), then the third preamble PS is selected (S320).

If the processing of steps S317, S319, or S320 is completed, the processing proceeds to step S321.

Then, a response frame to which these selected training patterns are attached is transmitted (S321). The response frame herein is the block ACK frame, the block NACK frame, or the delay ACK frame.

Furthermore, if it is determined in the decision processing of step S322 that the self-destinated block ACK request frame is received ("YES" in S322), the processing returns to step S310, and the block ACK frame or the block NACK frame is sent as a reply later.

Moreover, if it is determined that the self-destinated block ACK request frame is not received ("NO" in S322) and if it is determined that the transmission channel is releasable ("YES" in S323), the fourth preamble PE indicating the completion is set as necessary (S324), which is enabled for transmission. If the processing of step S324 is completed, the data reception processing ends.

Further, if it is determined in the decision processing of step S324 that the transmission channel is not released by transmitting the block NACK frame to retransmit the undelivered data ("NO" in S323), the processing returns to step S301 in Fig. 35, the retransmission data is received.

### <2. Modification>

### (Other Exemplary Configurations)

As described above, the transmitting-side communication device 10Tx can be configured as, for example, the access point AP10 (base station), and the receiving-side communication device 10Rx can be configured, for example, as the communication terminal STA10 (terminal station). However, the transmitting-side communication device 10Tx or the receiving-side communication device 10Rx can be configured as a part (e.g., a wireless communication module, a wireless chip, etc.) of the device (component) constituting the access point AP10 or the communication terminal STA10.

Further, in one example, the receiving-side communication device 10Rx configured as the communication terminal STA10 can be electronic equipment with a wireless communication function, including a smartphone, tablet terminal, mobile phone, personal computer, digital camera, game machine, TV receiver, wearable terminal, or speaker device.

### (Example of Training Pattern)

The description above is given of an example of the case where the length of the data payload divided into three stages of "long", "middle", and "short" allows the first preamble PL, the second preamble PM, and the third preamble PS to be defined depending on the length. However, in one example, the training pattern can be optionally defined, for example, by dividing the length of the data payloads into four or more stages.

As described above, the present technology provides a training pattern (preamble) and an access control method that can identify the occupancy time (occupancy duration) common to different wireless communication systems.

In other words, in the frequency band shared and operated by different wireless communication systems, a common training pattern that can identify that communication is performed in the other wireless communication system is defined. In addition, there is provided the access control method of selecting the training pattern (type thereof) corresponding to the transmission channel occupancy time in the wireless communication system and configuring a frame for its notification. Thus, it is possible to recognize (figure out) the occupancy condition of the transmission channel with ease.

Further, different wireless communication systems define a common training pattern to share and use one frequency band and use different training patterns depending on the time occupied by the transmission channel, which makes it possible for even the other wireless communication system to recognize sequentially the time the transmission channel is made available.

In one example, the use of a plurality of training patterns depending on the transmission channel occupancy time makes it possible even for the other wireless communication system to approximately recognize the time to be occupied after the preamble. In addition, in one example, even if the other wireless communication system fails to recognize information regarding the duration of the wireless LAN system, it is possible for the other wireless communication system to recognize the use condition of the transmission channel by some degree of time reference.

The training pattern allows whether the communication on the transmission channel is transient (transmission of a signal indicating the completion) or is likely to be used repeatedly to be identified. In addition, the training pattern can be changed each time by continuing use of data depending on the remaining amount of data to be transmitted and the degree of congestion of the transmission channel, to provide the training pattern allowing the other wireless communication system to identify whether of the use by itself.

Further, the insertion of a training pattern indicating the remaining time in the middle of the data makes it possible to notify the other wireless communication system of the remaining occupancy time efficiently in a case where data is transmitted while occupying the transmission channel for a long period of time. It is possible to insert the training pattern indicating the remaining time in the middle of the data as a mid-amble. The periodic insertion of the training pattern in the middle of the data makes it possible for even for the other wireless communication system to recognize, in a short period of time, that the transmission is busy.

Furthermore, upon the completion of data transmission, the notification of the training pattern indicating the completion makes it possible to notify the other wireless communication system that the transmission channel is available. In one example, even if more data is intended to be transmitted, it is possible to notify the other wireless communication system of the stop of data transmission, resulting in the improvement of frequency utilization efficiency.

Further, the training pattern that can be used not only for the data frame but also for the control frame such as the ACK frame is capable of being used for control of transmitting the block ACK request frame from the transmitting-side communication device 10Tx and receiving the block ACK frame from the receiving-side communication device 10Rx.

Furthermore, the receiving-side communication device 10Rx is capable of judging whether or not the data is retransmitted depending on the data reception status to set the training pattern corresponding to the time to occupy the transmission channel, so that the data can be reliably received.

The receiving-side communication device 10Rx, upon the completion of data retransmission, notify the training pattern indicating the completion, so it is possible to effectively inform the other wireless communication system that the transmission channel is made available. Furthermore, as its derivative, the receiving-side communication device 10Rx transmits the training patterns at a predetermined timing, so it is possible to notify the surrounding communication devices that the reception is being performed on the transmission channel.

### (Configuration of Compute)

The processes in each step in the flowchart described above can be executed by hardware, and can also be executed in software. In the case of executing the series of processes by software, a program forming the software is installed on a computer in each device.

In this regard, in this specification, the computer does not necessarily need to perform the processing in accordance with the program in order shown in the flowchart in a time series. That is, the processing performed by the computer in accordance with the program also includes processing executed in parallel or individually (e.g., parallel processing or objectoriented processing).

Further, it is possible to process the program may be processed by a single computer (processor) or to dispersedly process it by a plurality of computers. Furthermore, it is possible to transfer the program to a remote computer for execution.

Further, in this specification, a system has the meaning of a set of a plurality of structural elements (such as an apparatus or a module (part)), and does not take into account whether or not all the structural elements are in the same casing.

In addition, an embodiment of the present technology is not limited to the embodiments described above, and various changes and modifications may be made without departing from the scope of the present technology.

Further, each step described by the above-mentioned flowcharts can be executed by one apparatus or by allocating a plurality of apparatuses. In addition, in the case where a plurality of processes is included in one step, the plurality of processes included in this one step can be executed by one apparatus or by sharing a plurality of apparatuses.

Furthermore, the effects described in this specification are merely examples and are not limited, and other effects may be exerted.

Additionally, the present technology may also be configured as below.
(1) A communication device including:
   a controller configured to perform controlling of transmitting a data signal to another communication device via a transmission channel, in which
   the controller performs controlling of
   selecting a training pattern corresponding to an occupancy time of the transmission channel among a plurality of types of training patterns and
   transmitting a signal with the selected training pattern attached to the another communication device via the transmission channel.
(2) The communication device according to (1), in which
   the controller performs access control depending on a detection status of the training pattern transmitted from the another communication device.
(3) The communication device according to (1) or (2), in which
   the controller selects the training pattern depending on a use condition of the transmission channel in a case where the predetermined data signal is transmitted and then the subsequent data signal is continued to be transmitted.
(4) The communication device according to any one of (1) to (3), in which
   the controller selects the training pattern corresponding to a remaining time to be taken to transmit the data signal in a middle of the data signal.
(5) The communication device according to any one of (1) to (4), in which
   the controller selects the training pattern for notifying that the transmission channel is released upon completion of use of the transmission channel.
(6) The communication device according to any one of (1) to (5), in which
   the controller selects the training pattern to be attached to a request signal that requests a receipt acknowledgment signal corresponding to a reception status of the data signal in the another communication device.
(7) The communication device according to any one of (1) to (6), in which
   the controller aggregates a plurality of data to construct the data signal to be transmitted.
(8) The communication device according to any one of (1) to (7), in which
   the training pattern includes a combination of a plurality of training sequences.
(9) The communication device according to any one of (1) to (8), in which
   the training pattern is a signal format exchangeable with the another communication device, the another communication device constituting a wireless communication system including the communication device or constituting another wireless communication system.
(10) A communication method including:
   selecting, by a communication device, a training pattern corresponding to an occupancy time of a transmission channel among a plurality of types of training patterns; and
   transmitting, by the communication device, to another communication device via the transmission channel, a signal with the selected training pattern attached, in which
   the communication device performs controlling of transmitting a data signal to the another communication device via the transmission channel.
(11) A communication device including:
   a controller configured to perform controlling of receiving a data signal transmitted from another communication device via a transmission channel, in which
   the controller
   selects a training pattern corresponding to an occupancy time of the transmission channel among a plurality of types of training patterns and
   transmits, to the another communication device via the transmission channel, a signal with the selected training pattern attached.
(12) The communication device according to (11), in which
   the controller performs access control depending on a detection status of the training pattern transmitted from the another communication device.
(13) The communication device according to (11) or (12), in which
   the controller, in a case where the predetermined data signal is received and then the subsequent data signal is continued to be received, selects the training pattern corresponding to a remaining amount of data signal received.
(14) The communication device according to any one of (11) to (13), in which
   the controller selects the training pattern for notifying that the transmission channel is released upon completion of use of the transmission channel.
(15) The communication device according to any one of (11) to (14), in which
   the controller selects the training pattern to be attached to a first receipt acknowledgment signal depending on a reception status of the data signal.
(16) The communication device according to (15), in which
   the controller attaches the training pattern for notifying that the transmission channel is released to an end of the first receipt acknowledgment signal.
(17) The communication device according to any one of (11) to (16), in which
   the controller selects the training pattern to be attached to a second receipt acknowledgment signal depending on the occupancy time of the transmission channel of the data signal to be retransmitted.
(18) The communication device according to any one of (11) to (17), in which
   the controller selects the training pattern to be attached to a third receipt acknowledgment signal, in a case where a first receipt acknowledgment signal corresponding to a reception status of the data signal is transmitted with delay, depending on a time to be taken to construct the first receipt acknowledgment signal.
(19) The communication device according to any one of (11) to (18), in which
   the training pattern is a signal format exchangeable with the another communication device, the another communication device constituting a wireless communication system including the communication device or constituting another wireless communication system.
(20) A communication method including:
   selecting, by a communication device, a training pattern corresponding to an occupancy time of a transmission channel among a plurality of types of training patterns; and
   transmitting, by the communication device, to another communication device via the transmission channel, a signal with the selected training pattern attached, in which
   the communication device performs controlling of receiving a data signal transmitted from the another communication device via the transmission channel.

### REFERENCE SIGNS LIST

- 1-1, 1-3: Wireless LAN system
- 1-2: Other wireless communication system
- 10, 10Tx, 10Rx: Communication device
- 20: Communication device
- 30: Communication device
- 11: Network connection module
- 12: Information input module
- 13: Device control module
- 14: Information output module
- 15: Wireless communication module
- 101: Interface
- 102: Transmission buffer
- 103: Transmission sequence management unit
- 104: Transmission frame construction unit
- 105: Communication control unit
- 106: Access control unit
- 107: Transmission signal processing unit
- 108: Preamble construction unit
- 109: Transmitting and receiving antenna unit
- 110: Preamble detection unit
- 111: Reception signal processing unit
- 112: Reception frame analysis unit
- 113: Reception sequence management unit
- 114: Reception buffer
- AP10: Access point
- STA10: Communication terminal

## Claims

1. A communication device comprising:
a controller configured to perform controlling of transmitting a data signal to another communication device via a transmission channel, wherein
the controller performs controlling of
selecting a training pattern corresponding to an occupancy time of the transmission channel among a plurality of types of training patterns and
transmitting a signal with the selected training pattern attached to the another communication device via the transmission channel.

2. The communication device according to claim 1, wherein
the controller performs access control depending on a detection status of the training pattern transmitted from the another communication device.

3. The communication device according to claim 1, wherein
the controller selects the training pattern depending on a use condition of the transmission channel in a case where the predetermined data signal is transmitted and then the subsequent data signal is continued to be transmitted.

4. The communication device according to claim 1, wherein
the controller selects the training pattern corresponding to a remaining time to be taken to transmit the data signal in a middle of the data signal.

5. The communication device according to claim 1, wherein
the controller selects the training pattern for notifying that the transmission channel is released upon completion of use of the transmission channel.

6. The communication device according to claim 1, wherein
the controller selects the training pattern to be attached to a request signal that requests a receipt acknowledgment signal corresponding to a reception status of the data signal in the another communication device.

7. The communication device according to claim 1, wherein
the controller aggregates a plurality of data to construct the data signal to be transmitted.

8. The communication device according to claim 1, wherein
the training pattern includes a combination of a plurality of training sequences.

9. The communication device according to claim 1, wherein
the training pattern is a signal format exchangeable with the another communication device, the another communication device constituting a wireless communication system including the communication device or constituting another wireless communication system.

10. A communication method comprising:
selecting, by a communication device, a training pattern corresponding to an occupancy time of a transmission channel among a plurality of types of training patterns; and
transmitting, by the communication device, to another communication device via the transmission channel, a signal with the selected training pattern attached, wherein
the communication device performs controlling of transmitting a data signal to the another communication device via the transmission channel.

11. A communication device comprising:
a controller configured to perform controlling of receiving a data signal transmitted from another communication device via a transmission channel, wherein
the controller
selects a training pattern corresponding to an occupancy time of the transmission channel among a plurality of types of training patterns and
transmits, to the another communication device via the transmission channel, a signal with the selected training pattern attached.

12. The communication device according to claim 11, wherein
the controller performs access control depending on a detection status of the training pattern transmitted from the another communication device.

13. The communication device according to claim 11, wherein
the controller, in a case where the predetermined data signal is received and then the subsequent data signal is continued to be received, selects the training pattern corresponding to a remaining amount of data signal received.

14. The communication device according to claim 11, wherein
the controller selects the training pattern for notifying that the transmission channel is released upon completion of use of the transmission channel.

15. The communication device according to claim 11, wherein
the controller selects the training pattern to be attached to a first receipt acknowledgment signal depending on a reception status of the data signal.

16. The communication device according to claim 15, wherein
the controller attaches the training pattern for notifying that the transmission channel is released to an end of the first receipt acknowledgment signal.

17. The communication device according to claim 11, wherein
the controller selects the training pattern to be attached to a second receipt acknowledgment signal depending on the occupancy time of the transmission channel of the data signal to be retransmitted.

18. The communication device according to claim 11, wherein
the controller selects the training pattern to be attached to a third receipt acknowledgment signal, in a case where a first receipt acknowledgment signal corresponding to a reception status of the data signal is transmitted with delay, depending on a time to be taken to construct the first receipt acknowledgment signal.

19. The communication device according to claim 11, wherein
the training pattern is a signal format exchangeable with the another communication device, the another communication device constituting a wireless communication system including the communication device or constituting another wireless communication system.

20. A communication method comprising:
selecting, by a communication device, a training pattern corresponding to an occupancy time of a transmission channel among a plurality of types of training patterns; and
transmitting, by the communication device, to another communication device via the transmission channel, a signal with the selected training pattern attached, wherein
the communication device performs controlling of receiving a data signal transmitted from the another communication device via the transmission channel.
